# EUROPÄISCHE PATENTSCHRIFT

(11) **EP 3 695 759 B1**
(45) Veröffentlichungstag und Bekanntmachung des Hinweises auf die Patenterteilung: **07.06.2023**
(21) Anmeldenummer: 20157186.6
(22) Anmeldetag: 13.02.2020
(51) Int. Cl.: A47J 31/38, A47J 31/54

(54) **VORRICHTUNG ZUR ZUBEREITUNG EINES HEISSEN GETRÄNKS**
DEVICE FOR THE PREPARATION OF A HOT BEVERAGE
DISPOSITIF POUR LA PRÉPARATION D'UNE BOISSON CHAUDE

(30) Priorität: 15.02.2019 EP 19157505
(43) Veröffentlichungstag der Anmeldung: 19.08.2020
(73) Patentinhaber: Caffè A Mano GmbH, 70619 Stuttgart (DE)
(72) Erfinder: Widmer, Markus, 3600 Thun (CH); Liebe, Thomas, 3608 Thun (CH)
(74) Vertreter: Herrmann, Johanna

(56) Entgegenhaltungen:
- WO-A1-2005/079641
- WO-A1-2015/073732
- FR-A- 1 174 038
- US-A1- 2014 208 954

## Beschreibung

### Hintergrund

Die vorliegende Erfindung betrifft eine Vorrichtung zur Zubereitung eines heissen Getränks, insbesondere eine Kaffeemaschine. Insbesondere betrifft die Erfindung eine Vorrichtung, welche einen manuell betätigbaren Hebel zur Erzeugung eines Wasserüberdrucks umfasst, der für die Zubereitung von Espresso geeignet ist. Der Hebel dient gemäss diesem Ausführungsbeispiel der Betätigung eines Kolbens in einem Zylinder.

Üblicherweise weisen diese Kaffeemaschinen einen externen Boiler zur Erhitzung des Wassers bis auf 120°C oder bis auf 130°C zur Dampferzeugung auf. Im Boiler liegen ungefähr 2 bis 3 bar Druck an. Das heisse Wasser wird vom Boiler in einen Zylinder geführt. In diesem Zylinder ist ein Kolben angeordnet, der durch Betätigung des Hebels im Zylinder verschoben werden kann. Wenn der Kolben sich in seiner Ausgangsstellung befindet, wird ein vom Kolben und den Zylinderwänden begrenztes Füllvolumen mit Heisswasser aus dem Boiler gespeist. Wenn das Füllvolumen mit Heisswasser befüllt ist, erfolgt die Betätigung des Hebels, um den Kolben derart zu bewegen, dass das Füllvolumen verkleinert wird, wobei das Heisswasser einem Brühgefäss zur Zubereitung des Kaffeegetränks zugeleitet wird. Der Boiler muss also vorgeheizt werden, um genügend Heisswasser für die Befüllung des Füllvolumens zur Verfügung zu halten. Daher ist für jede derartige Kaffeemaschine eine Aufheizzeit erforderlich, um einen genügenden Vorrat an Heisswasser für den Betrieb der Kaffeemaschine vorrätig zu halten.

Daher verbraucht eine derartige Kaffeemaschine bereits Energie, bevor sie sich in einem betriebsbereiten Zustand befindet. Abgesehen vom erhöhten Energieverbrauch hat es sich als nachteilig erwiesen, dass der Benutzer einige Minuten Wartezeit einplanen und in Kauf nehmen muss, bis die Kaffeemaschine betriebsbereit ist. Ausserdem sind Wassertemperaturen um 100°C nicht besonders geeignet für die Kaffeezubereitung. Die fehlende Möglichkeit zur Temperaturregulierung ist ein weiterer Nachteil solcher Kaffeemaschinen.

### Stand der Technik

Eine derartige Kaffeemaschine ist beispielsweise aus der WO2017/009186 A1 bekannt. Heisses Wasser wird gemäss WO2017/009186 A1 in einem Boiler produziert und vorrätig gehalten. Wenn die Kaffeemaschine in Betrieb genommen wird, betätigt der Benutzer einen Hebel, mittels welchem ein in einem Zylinder befindlicher Kolben eine Hubbewegung ausführt. In der Zylinderwand befindet sich ein Einlass für Heisswasser. Eine Heisswasserleitung führt vom Boiler zu diesem Einlass. Sobald der Kolben am oberen Totpunkt angelangt ist, kann der Einlass geöffnet werden und heisses Wasser kann in den Zylinderinnenraum einströmen. Das heisse Wasser wird durch die Abwärtsbewegung des Kolbens aus dem Füllraum auf ein Getränkepräparat, beispielsweise ein Pulver, insbesondere Kaffeepulver geleitet und durch das auf einem Trägerelement befindliche Getränkepräparat gepresst.

Ein Nachteil der vorbekannten Kaffeemaschine liegt in der Vorheizzeit, die erforderlich ist, um das im Boiler befindliche Wasser aufzuheizen, sodass eine Wartezeit von bis zu einigen Minuten in Kauf genommen werden muss, bis das im Boiler befindliche Wasser die erforderliche Temperatur für die Kaffeezubereitung aufweist.

Mittels der Kaffeemaschine gemäss WO2005079641 wird dieser Nachteil beseitigt, indem nur die für die Kaffeezubereitung benötigte Wassermenge in einer Heizspirale erhitzt wird. Hierzu wird das Wasser durch die Heizspirale geleitet und nur das der Heizspirale zugeführte Heisswasser für die Zubereitung des Kaffeegetränks verwendet. Allerdings befindet sich die Heizspirale selbst in einem Wasserbad, welches auf der für die Heizspirale erforderlichen Temperatur gehalten werden muss. Eine Vorheizzeit muss für die Beheizung des Wasserbads in Kauf genommen werden, wenn die Kaffeemaschine in Betrieb genommen wird.

Gemäss der FR 1174038 ist der Kolbenraum von einem beheizbaren Wasserbad umgeben. Das Wasser im Wasserbad erwärmt das Wasser im Kolbenraum. Gemäss diesem Ausführungsbeispiel muss das Wasser im Wasserbad einen Überdruck aufweisen, damit die Temperatur des Wassers im Kolbenraum insbesondere hoch genug für die Zubereitung von Espresso ist. Daher ist für diese Lösung zusätzliche Heizenergie für die indirekte Erwärmung des Wassers im Kolbenraum erforderlich, um Wärmeverluste durch Wärmeleitung über die Behälterwände, das heisst die Kolbenraumwände und die Aussenwände des Wasserbads zu kompensieren. Daher weist diese Lösung einen höheren Energieverbrauch auf als die Lösung gemäss WO2005079641.

Ein Nachteil dieser vorgenannten Kaffeemaschinen liegt im erhöhten Energieverbrauch, der für die Vorheizzeit anfällt, sowie gegebenenfalls für den Dauerbetrieb des externen oder internen Boilers, wenn die Kaffeemaschine nicht ausgeschaltet wird, wenn diese Vorheizzeit vermieden werden soll. Somit wird auch dann Energie verbraucht, wenn die Kaffeemaschine nicht zur Zubereitung des Kaffeegetränks im Einsatz ist.

### Aufgabe der Erfindung

Es ist Aufgabe der Erfindung, eine Vorrichtung zur Zubereitung eines heissen Getränks zu entwickeln, welche unmittelbar nach dem Einschalten bereits für die Zubereitung des Heissgetränks betriebsbereit ist, somit keine oder keine merkliche Vorheizzeit mehr erforderlich ist.

Eine weitere Aufgabe der Erfindung besteht darin, den Energieverbrauch für eine Vorrichtung zur Zubereitung eines heissen Getränks zu reduzieren.

Eine weitere Aufgabe der Erfindung besteht darin, eine Vorrichtung zur Zubereitung eines heissen Getränks bereitzustellen, mittels welcher der Durchfluss präzise geregelt werden kann.

Eine weitere Aufgabe der Erfindung besteht darin, eine Vorrichtung zur Zubereitung eines heissen Getränks bereitzustellen, mittels welcher die Wassertemperatur präzise geregelt werden kann. Insbesondere kann für jede Portion Kaffee eine individuelle Temperatur ohne Wartezeit eingestellt werden.

### Beschreibung der Erfindung

Die Lösung der Aufgabe der Erfindung erfolgt durch eine Vorrichtung gemäss Anspruch 1. Vorteilhafte Ausführungsbeispiele der Vorrichtung sind Gegenstand der Ansprüche 2 bis 15.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für die erfindungsgemässe Kaffeemaschine. Die Beschreibung einer bestimmten Kaffeemaschine ist nur als beispielhaft anzusehen. In der Beschreibung und den Ansprüchen werden die Begriffe "enthalten", "umfassen", "aufweisen" als "enthalten, aber nicht beschränkt auf" interpretiert.

Im Folgenden wird der Begriff Öffnung für Öffnungen beliebigen Querschnitts verwendet. Insbesondere kann eine Öffnung einen kreisförmigen oder ovalen Querschnitt aufweisen.

Der Begriff Kanal kann für Kanäle beliebigen Strömungsquerschnitts verwendet werden, insbesondere für Kanäle mit rechteckigem, kreisförmigen oder ovalen Strömungsquerschnitt. Diese Kanäle können von einem Fluid, das heisst insbesondere einer Flüssigkeit oder einem Gas, insbesondere Wasser oder Dampf, durchströmt werden.

Eine Vorrichtung zur Zubereitung eines heissen Getränks umfasst einen Wasserbehälter einen Durchlauferhitzer und eine Brühvorrichtung, wobei der Wasserbehälter ein Anschlusselement für kaltes Wasser aufweist, wobei der Wasserbehälter fluidleitend mit dem Durchlauferhitzer verbunden ist, sodass der Durchlauferhitzer mit dem kalten Wasser aus dem Wasserbehälter befüllbar ist. Insbesondere dient das Anschlusselement der fluidleitenden Verbindung zwischen dem Wasserbehälter und dem Durchlauferhitzer.

Der Wasserbehälter umfasst einen Behälterboden, einen Behältermantel und einen Behälterdeckel. Ein Kolben ist im Wasserbehälter bewegbar zwischen einem oberen Totpunkt und einem unteren Totpunkt angeordnet. Insbesondere enthält der Wasserbehälter einen Füllraum für kaltes Wasser, der zwischen dem Kolben und dem Behälterboden angeordnet ist, wenn der Kolben sich nicht im unteren Totpunkt befindet. Insbesondere kann der Füllraum fluidleitend mit dem Durchlauferhitzer verbunden sein. Der Durchlauferhitzer ist mit dem kalten Wasser aus dem Füllraum befüllbar, sodass eine dem Füllvolumen entsprechende Wassermenge in den Durchlauferhitzer einspeisbar ist.

Die Wassermenge im Durchlauferhitzer entspricht im Wesentlichen der Wassermenge im Füllraum und damit der Menge des heissen Getränks, welche mit einer einzigen Zubereitung herstellbar ist. Somit muss nur eine dem Getränk entsprechende Wassermenge aufgeheizt werden, was einen Energiebedarf für einen sehr kurzen Zeitraum erfordert. Der Zeitraum, in welchem Energie zugeführt werden muss, kann weniger als eine Minute betragen.

Gemäss einem Ausführungsbeispiel ist ein Anschlusselement zur Befüllung des Füllraums mit kaltem Wasser stromaufwärts des Füllraums vorgesehen. Das Anschlusselement kann mit einem Wassertank oder Wassernetzanschluss durch eine Einlassleitung verbunden sein. Im Anschlusselement oder in der Einlassleitung kann ein Rückschlagventil angeordnet sein. Dieses Rückschlagventil verhindert, dass Wasser in den Wassertank oder in den Wassernetzanschluss zurückgedrückt wird, wenn der Kolben in Richtung des unteren Totpunkts bewegt wird.

Gemäss einem Ausführungsbeispiel weist das Anschlusselement die Einlassleitung zum Füllraum und eine Auslassleitung zum Durchlauferhitzer auf.

Gemäss einem Ausführungsbeispiel ist das Anschlusselement am Behälterboden angeordnet. Hierdurch kann der Behältermantel völlig frei von Anschlüssen bleiben, was zu geringeren Herstellkosten für den Behältermantel führt. Zudem ist eine Dichtung zwischen dem Kolben und der Behälterwand einfach möglich, wenn die Behälterwand keine Öffnungen enthält.

Gemäss einem Ausführungsbeispiel ist der Wasserbehälter als Zylinder ausgebildet. Im Inneren des Zylinders befindet sich gemäss diesem Ausführungsbeispiel ein bewegbarer Kolben. Der Durchlauferhitzer wird gemäss diesem Ausführungsbeispiel mit Kaltwasser aus dem Zylinder befüllt. Der Wasserbehälter kann einen separaten Wassertank umfassen. Ein separater Wassertank kann insbesondere vorgesehen sein, um einen grösseren Wasservorrat anzulegen, sodass mit der Vorrichtung mehrere heisse Getränke zubereitet werden können, ohne den Wasserbehälter nachzufüllen. Der Wassertank kann beispielsweise als Behälter aus einem transparenten Material bestehen. Der Wassertank kann aus Glas oder einem transparenten Kunststoff bestehen oder Glas oder einen transparenten Kunststoff enthalten. Der Wassertank kann als zylinderförmiger Behälter ausgebildet sein. Der Wassertank kann mit dem Druckbehälter lösbar verbunden sein, welcher den Kolben enthält.

Gemäss einem Ausführungsbeispiel enthält die Brühvorrichtung ein Brühventil. Das Brühventil ist zur Regelung des Durchflusses des Heisswassers zum Filterträger vorgesehen, sodass die Brühdauer sowie die Wassermenge, welche für die Zubereitung des heissen Getränks benötigt werden, nach den Wünschen des Benutzers eingestellt werden können. Die Verwendung des Brühventils hat einen weiteren Vorteil, wenn der Kolben manuell durch einen Schwenkhebel betätigt wird. Wenn der Füllraum des Wasserbehälters befüllt werden soll, wird der Kolben vom Benutzer durch Betätigung des Schwenkhebels von seiner Stellung am oder nahe beim unteren Totpunkt zum oberen Totpunkt bewegt. Gemäss einem Ausführungsbeispiel wird der Schwenkhebel von einer oberen Stellung in eine untere Stellung bewegt. Während der Hubbewegung des Kolbens wird kaltes Wasser in den Füllraum eingelassen oder angesaugt, wenn die Kolbenbewegung zu einem Unterdruck im Füllraum führt.

Die Hubbewegung des Kolbens führt gemäss einem Ausführungsbeispiel zu einer Kompression eines Federelements, welches im Wasserbehälter zwischen dem Kolben und dem Behälterdeckel angeordnet sein kann. Sobald der Benutzer den Schwenkhebel loslässt, würde sich das Federelement entspannen und der Kolben schlagartig durch die Rückstellkraft des Federelements wieder in Richtung des unteren Totpunkts, das heisst in seine Ausgangsstellung, geführt. Der Schwenkhebel würde ebenfalls schlagartig in seine Ruheposition zurückschnellen, was ein Verletzungsrisiko sein kann. Wenn das System mit Wasser gefüllt ist, verhindert das Wasser als inkompressibles Medium das Zurückschnellen des Schwenkhebels dann, wenn das Wasser zwischen dem Füllraum und dem Brühventil gefangen ist. Dies ist insbesondere dann der Fall, wenn das Brühventil geschlossen ist und ein Rückschlagventil stromaufwärts des Füllraums angeordnet ist. Zwischen dem Brühventil und dem Rückschlagventil staut also das Wasser gegebenenfalls in der Einlassleitung, im Anschlusselement, im Füllraum, in der Auslassleitung, im Durchlauferhitzer und in der Zuleitung zum Brühventil.

Das Rückschlagventil im Anschlusselement oder in der Einlassleitung zum Druckbehälter verhindert, dass das Wasser in den Wassertank oder in die Einlassleitung zurückfliesst. Das stromabwärts des Rückschlagventils befindliche Wasser muss wegen des Rückschlagventils in Richtung des Durchlauferhitzers und des Brühventils weiterfliessen. Wenn bei geschlossenem Brühventil der Schwenkhebel losgelassen wird, kann das Wasser nicht entweichen und bildet eine inkompressible Sperre, das heisst, der Schwenkhebel verharrt im Wesentlichen in seiner Position. Wird das Brühventil geöffnet und Heisswasser fliesst in Richtung des Trägerelements zur Zubereitung eines heissen Getränks ab, bewegt sich der Kolben und damit auch der Schwenkhebel wieder in Richtung seiner Ausgangsstellung, dies allerdings auch bei vollständig geöffnetem Brühventil erheblich langsamer als in einem System, welches einen luftgefüllten Füllraum enthält. Die vorliegende Anordnung erfüllt somit die Funktion eines Flüssigkeitsdämpfers.

Ein definiertes Wasservolumen befindet sich im Füllraum, in der Auslassleitung, die sich vom Füllraum zum Durchlauferhitzer erstreckt, im Durchlauferhitzer und in der Zuleitung vom Durchlauferhitzer zum Brühventil. Nach jedem Kolbenhub bleibt Wasser zwischen dem Kolben und Brühventil zurück. Gemäss einem Ausführungsbeispiel beträgt die Länge sämtlicher Leitungen ca. 300 mm. Wird eine Leitung mit einem Innendurchmesser von 2 mm verwendet, ergibt das ca. 1ml Wasservolumen auf dieser Wegstrecke. Im Durchlauferhitzer befinden sich gemäss diesem Ausführungsbeispiel 3.5 ml Wasservolumen. Insgesamt beträgt das Wasservolumen in sämtlichen Leitungen zwischen dem Füllraum und dem Brühventil nicht mehr als 5 ml.

Bei der ersten Befüllung der Vorrichtung kommt also etwas weniger Wasser zum Trägerelement als in den nachfolgenden Kolbenhüben, bei denen dann jeweils ca. 85 ml zu erwarten sind.

Wenn der Füllraum ein Volumen von ca. 85 ml aufweist, beträgt das Füllvolumen das 17-fache des Leitungsvolumens. Der Einfluss der Leitungen auf den Wasserdruck ist gering, sodass selbst dann, wenn die Leitungen kein Wasser enthalten, eine Dämpfung des Kolbens durch das im Füllraum befindliche Wasser erfolgt, die umso höher ist, je geringer die vom Benutzer gewählte Durchflussrate durch das Brühventil ist.

Das Brühventil kann insbesondere als Durchflussregelventil ausgebildet sein. Insbesondere enthält das Brühventil einen Drucksensor, sodass der Benutzer den Druck des Heisswassers, welches sich in der Brühvorrichtung befindet, ermitteln kann.

Gemäss einem Ausführungsbeispiel umfasst das Brühventil einen Ventilkörper und eine Ventilstange. Mittels der Ventilstange kann der Durchfluss des Heisswassers durch die Brühvorrichtung eingestellt werden. Gemäss einem Ausführungsbeispiel ist die Ventilstange mit einem Hebel verbunden, der vom Benutzer zur Einstellung des gewünschten Durchflusses in der Brühvorrichtung manuell betätigbar ist.

Gemäss einem Ausführungsbeispiel ist eine Kolbenstange vorgesehen, an deren unterem Ende der Kolben befestigt ist. Insbesondere kann die Kolbenstange ein oberes Ende aufweisen, welches mit einem Schwenkhebel derart in Verbindung ist, dass die Kolbenstange durch Betätigung des Schwenkhebels relativ zum Wasserbehälter bewegbar ist. Der Schwenkhebel kann um einen Winkel von bis zu 150° geschwenkt werden.

Gemäss einem Ausführungsbeispiel enthält die Kolbenstange eine Zahnstange am oberen Ende. Insbesondere kann der Schwenkhebel zur Betätigung des Kolbens ein Zahnrad enthalten. Insbesondere kann das Zahnrad im Eingriff mit der Zahnstange stehen. Nach einem Ausführungsbeispiel kann zwischen dem Zahnrad und der Zahnstange eine Zahnwippe angeordnet sein, um die Bewegung vom Zahnrad auf die Zahnstange zu übertragen.

Gemäss einem Ausführungsbeispiel ist ein Federelement im Wasserbehälter zwischen dem Behälterdeckel und dem Kolben angeordnet. Mittels des Federelements kann der Kolben sich vom oberen Totpunkt zum unteren Totpunkt bewegen, wenn der Benutzer den Schwenkhebel loslässt. Der Schwenkhebel bewegt sich selbsttätig in die Ausgangsstellung zurück, weil der Kolben über die Kolbenstange, die damit verbundene Zahnstange, die Zahnwippe und das Zahnrad mit dem Schwenkhebel gekoppelt ist.

Gemäss jedem der Ausführungsbeispiele kann die Brühvorrichtung, insbesondere das Brühventil zwischen dem Durchlauferhitzer und einem Trägerelement angeordnet sein. Insbesondere kann die Brühvorrichtung eine Brause enthalten. Gemäss einem Ausführungsbeispiel ist die Brause mit einem Verteilgitter verbunden. Sämtliche Bestandteile der Brühvorrichtung können aus schlecht wärmeleitendem Material hergestellt sein. Insbesondere können Kunststoffe zum Einsatz kommen. Hiermit kann sichergestellt werden, dass der Wärmeübergang an die Umgebung während des Brühvorgangs gering gehalten werden kann, sodass kaum Wärmeverluste auftreten.

Gemäss jedem der Ausführungsbeispiele kann die Vorrichtung eine Dampferzeugungsvorrichtung zur Erzeugung von Wasserdampf enthalten. Insbesondere kann die Dampferzeugungsvorrichtung einen Durchlauferhitzer und ein Dampfventil umfassen. Gemäss einem Ausführungsbeispiel ist ein Hebel zur manuellen Betätigung eines Dampfventils vorgesehen, sodass eine der gewünschten Dampfmenge entsprechende Wassermenge dem Durchlauferhitzer zugeführt wird, wobei die Wassermenge im Durchlauferhitzer zur Verdampfung gebracht wird. Insbesondere kann der Dampf vom Durchlauferhitzer durch eine Dampfleitung zu einer Düse geleitet werden. Die Düse enthält eine Mehrzahl von Öffnungen, welche eine Erhöhung der Strömungsgeschwindigkeit des Dampfs bewirken. Insbesondere für die Anwendung zum Schäumen von Milch kann durch die Verwendung der Düse die Umwälzung der Milch begünstigt und somit die Schaumbildung verbessert werden.

Insbesondere können mittels der Vorrichtung nach einem der Ausführungsbeispiele Kaffee, Tee, heisser Kakao, heisse Schokolade oder auch Dampf zubereitet werden. Insbesondere kann die Vorrichtung zur Zubereitung von Espresso verwendet werden.

Die Vorrichtung kann ein Justierelement zur Regelung der Temperatur, das heisst einen Temperaturregler, enthalten. Insbesondere hat der Temperaturregler den Vorteil, dass die Möglichkeit besteht, jede Portion des heissen Getränks bei einer individuellen Temperatur zu extrahieren. Somit ist kein temperiertes Wasserreservoir erforderlich. Die Extraktionstemperatur kann jederzeit ohne zeitliche Verzögerung verändert werden. Daher kann die Vorrichtung sich immer im kalten Zustand befinden, solange sie nicht in Betrieb genommen wird. Erst wenn die Zubereitung eines heissen Getränks erfolgen soll, wird die Vorrichtung eingeschaltet und erst ab diesem Zeitpunkt wird Energie zum Betrieb der Vorrichtung benötigt.

Der Wasserbehälter einer Vorrichtung nach einem der vorhergehenden Ausführungsbeispiele kann einen Wassertank oder eine Wasserversorgungsleitung und einen Druckbehälter umfassen. Insbesondere kann zwischen dem Wassertank oder der Wasserversorgungsleitung und dem Druckbehälter ein Rückschlagventil angeordnet sein.

Die vorliegende Vorrichtung ist somit durch einen im Betrieb sehr geringen COz-Fussabdruck gekennzeichnet, da sie sehr energiesparend verwendet werden kann.

### Kurzbeschreibung der Zeichnungen

Nachfolgend wird die erfindungsgemässe Vorrichtung anhand einiger Ausführungsbeispiele dargestellt. Es zeigen
Fig. 1 eine Ansicht einer Vorrichtung nach einem Ausführungsbeispiel,
Fig. 2 eine Ansicht der Vorrichtung nach dem in Fig. 1 gezeigten Ausführungsbeispiel von der gegenüberliegenden Seite,
Fig. 3 einen Schnitt durch die Vorrichtung gemäss dem in Fig. 1 gezeigten ersten Ausführungsbeispiel,
Fig. 4 ein Detail einer Brühvorrichtung für eine Vorrichtung gemäss Fig. 1,
Fig. 5 eine Dampferzeugungsvorrichtung für eine Vorrichtung gemäss Fig. 1,
Fig. 6 eine schematische Darstellung einer Vorrichtung gemäss Fig. 1,
Fig. 7 ein Ausführungsbeispiel einer Vorrichtung mit einem Wasservorratsbehälter,
Fig. 8 eine schematische Darstellung eines zweiten Ausführungsbeispiels der Vorrichtung,
Fig. 9 eine schematische Darstellung eines dritten Ausführungsbeispiels der Vorrichtung,
Fig. 10 eine schematische Darstellung eines vierten Ausführungsbeispiels der Vorrichtung,
Fig. 11 eine Ansicht einer Variante für eine Dampferzeugungsvorrichtung,
Fig. 12a eine Schnittdarstellung eines Dampfventils für die Dampferzeugungsvorrichtung in einer ersten Stellung,
Fig. 12b eine Schnittdarstellung des Dampfventils für die Dampferzeugungsvorrichtung in einer zweiten Stellung,
Fig. 12c eine Schnittdarstellung des Dampfventils für die Dampferzeugungsvorrichtung in einer dritten Stellung,
Fig. 13 eine perspektivische Ansicht der Dampferzeugungsvorrichtung gemäss Fig. 11.

### Detaillierte Beschreibung der Zeichnungen

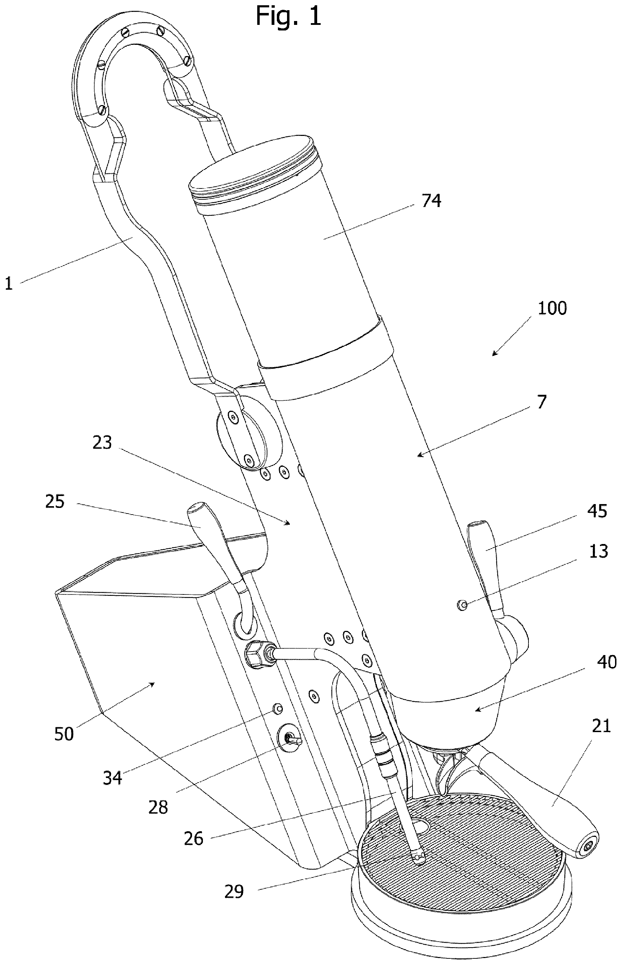

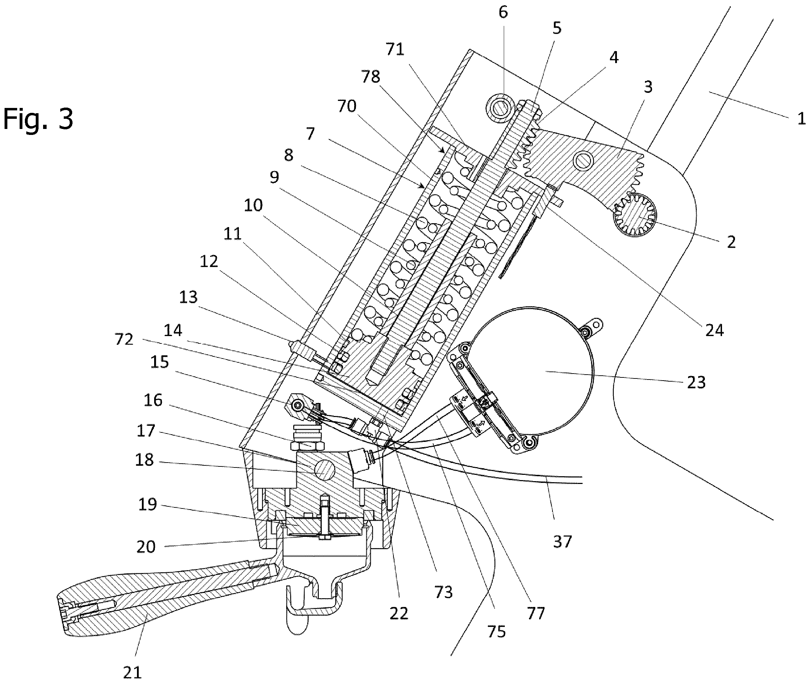

Fig. 1 zeigt eine Ansicht einer Vorrichtung 100 nach einem ersten Ausführungsbeispiel. Eine Vorrichtung zur Zubereitung eines heissen Getränks umfasst einen Wasserbehälter 7, einen Durchlauferhitzer 23 (siehe Fig. 3) und eine Brühvorrichtung 40. Der Wasserbehälter 7 weist ein Anschlusselement für kaltes Wasser auf. Der Wasserbehälter 7 ist fluidleitend mit dem Durchlauferhitzer 23 verbunden, sodass der Durchlauferhitzer 23 mit dem kalten Wasser aus dem Wasserbehälter 7 befüllbar ist. Die Vorrichtung 100 umfasst insbesondere einen Wasserbehälter 7, einen im Wasserbehälter 7 bewegbaren Kolben 14, der hier nicht sichtbar ist, einen Durchlauferhitzer 23 und eine Brühvorrichtung 40. Das Anschlusselement 22 an den Wasserbehälter 7 weist insbesondere einen Zulauf für kaltes Wasser und einen Ablauf für kaltes Wasser auf, wobei der Ablauf fluidleitend, beispielsweise über eine Ablaufleitung 75, mit dem Durchlauferhitzer 23 verbunden ist. Der Durchlauferhitzer 23 ist somit über die Ablaufleitung 75 mit dem kalten Wasser aus dem Wasserbehälter 7 befüllbar.

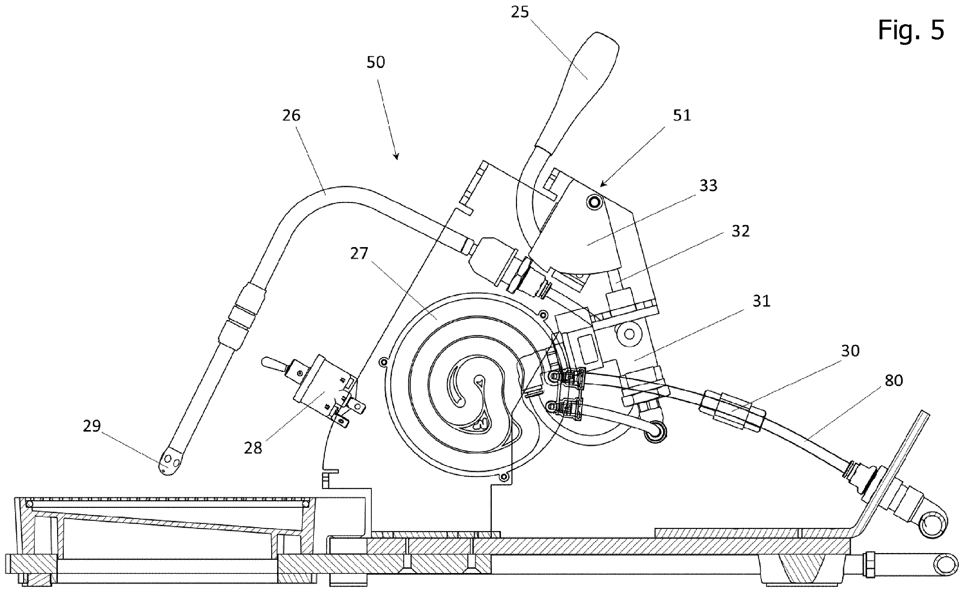

Die Vorrichtung 100 enthält eine Dampferzeugungsvorrichtung 50 zur Erzeugung von Wasserdampf. Insbesondere kann die Dampferzeugungsvorrichtung 50 einen Durchlauferhitzer 27 und ein Dampfventil 51 umfassen (siehe Fig. 5). Gemäss einem Ausführungsbeispiel ist ein Hebel 25 zur manuellen Betätigung eines Dampfventils 51 vorgesehen, sodass eine der gewünschten Dampfmenge entsprechende Wassermenge dem Durchlauferhitzer 27 zugeführt wird, wobei die Wassermenge im Durchlauferhitzer 27 zur Verdampfung gebracht wird. Insbesondere kann der Dampf vom Durchlauferhitzer 27 durch eine Dampfleitung 26 zu einer Düse 29 geleitet werden.

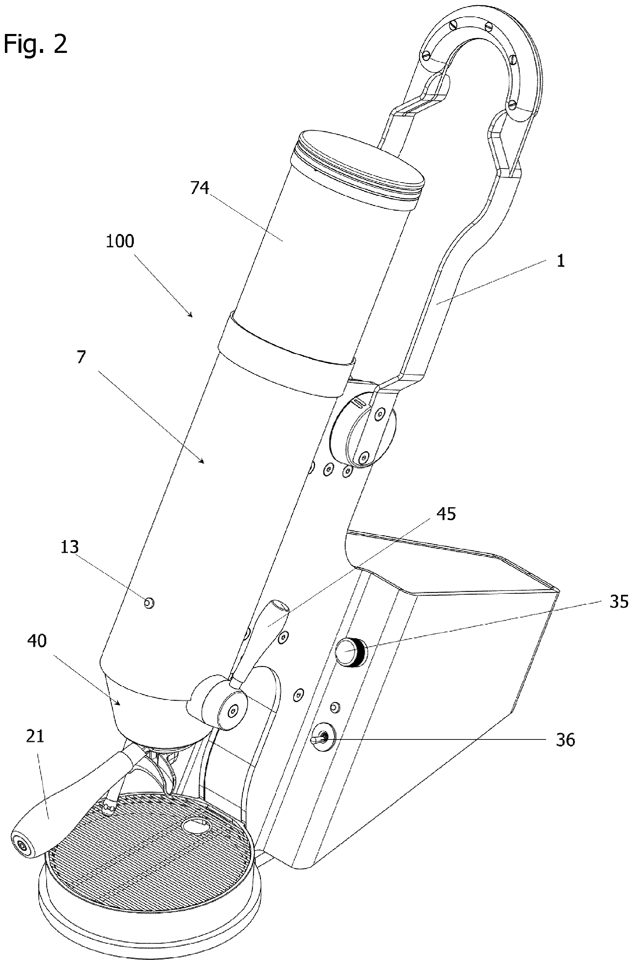

Fig. 2 zeigt eine Ansicht der Vorrichtung nach dem in Fig. 1 gezeigten Ausführungsbeispiel von der gegenüberliegenden Seite. Die Vorrichtung 100 zur Zubereitung eines heissen Getränks umfasst einen Wasserbehälter 7, einen Durchlauferhitzer 23 (siehe Fig. 3) und eine Brühvorrichtung 40, wobei der Wasserbehälter 7 ein Anschlusselement 22 (siehe Fig. 3) für kaltes Wasser aufweist. Der Wasserbehälter 7 ist fluidleitend mit dem Durchlauferhitzer 23 verbunden, sodass der Durchlauferhitzer 23 mit dem kalten Wasser aus dem Wasserbehälter befüllbar ist.

Die Vorrichtung kann ein Justierelement 35 zur Einstellung der gewünschten Betriebstemperatur. Die Betriebstemperatur kann insbesondere der Wassertemperatur des Wassers in der Warmwasserleitung 77 zur Brühvorrichtung entsprechen. Ein Hauptschalter 36 kann vorgesehen sein, um die Vorrichtung von der Energieversorgung zu trennen.

Fig. 3 zeigt einen Schnitt durch die Vorrichtung gemäss dem in Fig. 1 gezeigten Ausführungsbeispiel. Der Wasserbehälter 7 umfasst gemäss Fig. 3 einen Behälterboden 72, einen Behältermantel 70 und einen Behälterdeckel 71, wobei ein Kolben 14 im Wasserbehälter 7 bewegbar zwischen einem oberen Totpunkt und einem unteren Totpunkt angeordnet ist. Der Wasserbehälter 7 enthält einen Füllraum für kaltes Wasser, der zwischen dem Kolben 14 und dem Behälterboden 72 angeordnet ist, wenn der Kolben 14 sich nicht im unteren Totpunkt befindet. Der Füllraum ist fluidleitend mit dem Durchlauferhitzer 23 verbunden. Der Durchlauferhitzer 23 ist mit dem kalten Wasser aus dem Füllraum befüllbar, sodass eine dem Füllvolumen entsprechende Wassermenge in den Durchlauferhitzer 23 einspeisbar ist. Das Anschlusselement 22 ist am Behälterboden 72 angeordnet. Das Anschlusselement 22 kann einen Zulauf und einen Ablauf umfassen. Gemäss einem nicht dargestellten Ausführungsbeispiel können verschiedene Öffnungen für den Zulauf und den Ablauf vorgesehen sein.

Gemäss dem in Fig. 3 gezeigten Ausführungsbeispiel enthält die Brühvorrichtung 40 ein Brühventil 41. Das Brühventil 41 enthält einen Drucksensor 16 sowie einen Ventilkörper 17 und eine Ventilstange 18. Die Ventilstange 18 ist mit einem Hebel 45 verbunden, der vom Benutzer zur Einstellung des gewünschten Durchflusses in der Brühvorrichtung 40 manuell betätigbar ist.

Der Wasserbehälter 7 enthält eine Kolbenstange 5, an deren unterem Ende der Kolben 14 befestigt ist. Ein Federelement 8, 9 ist im Wasserbehälter 7 zwischen dem Behälterdeckel 71 und dem Kolben 14 angeordnet. Die Kolbenstange 5 ragt durch den Behälterdeckel 71 hindurch, sie wird somit durch den Behälterdeckel 71 geführt. Die Kolbenstange 5 weist ein oberes Ende auf, welches mit einem Schwenkhebel 1 derart in Verbindung ist, sodass die Kolbenstange 5 durch Betätigung des Schwenkhebels 1 relativ zum Wasserbehälter 7 bewegbar ist. Die Kolbenstange 5 weist ein oberes Ende auf, welches eine Zahnstange 4 enthält. Der Schwenkhebel 1 enthält ein Zahnrad 2, wobei das Zahnrad 2 im Eingriff mit der Zahnstange 4 steht. Das Zahnrad 2 kann insbesondere auf dem Schwenkhebel 1 befestigt sein, beispielsweise angeflanscht sein. Zwischen dem Zahnrad 2 und der Zahnstange 4 ist gemäss dem vorliegenden Ausführungsbeispiel eine Zahnwippe 3 angeordnet, um die Bewegung vom Zahnrad 2 auf die Zahnstange 4 zu übertragen.

Die Zubereitung des heissen Getränks wird eingeleitet, indem der Schwenkhebel 1 auf der der Frontseite der Vorrichtung 100 von oben nach unten bewegt wird. Der Schwenkhebel 1 ist mit einem Zahnrad 2 versehen, welches die Rotationsbewegung des Schwenkhebels 1 über eine Zahnwippe 3 auf eine Zahnstange 4 überträgt, welche auf einer Kolbenstange 5 angebracht ist. Die Kolbenstange 5 ist an dem der Zahnstange 4 gegenüberliegenden Ende an einem Kolben 14 befestigt. Der Kolben 14 ist im Wasserbehälter 7 bewegbar, wenn die Zahnstange 3 durch die Betätigung des Schwenkhebels 1 derart bewegt wird, dass der Kolben 14 in Richtung des oberen Totpunkts im Wasserbehälter 7 bewegt wird. Der Kolben 14 wird also gemäss dem vorliegenden Ausführungsbeispiel vom unteren Totpunkt zum oberen Totpunkt bewegt.

Die Zahnstange 4 ist im Gehäuse der Vorrichtung 100 mittels eines Auflagers 6 gelagert, um eine Biegung der Zahnstange 4 zu vermeiden, die auftreten würde, wenn Kräfte von der Zahnwippe 3 auf die Zahnstange 4 übertragen werden, wenn der Schwenkhebel 1 in der vorliegenden Darstellung nach unten bewegt wird.

Wenn der Schwenkhebel 1 nach unten bewegt wird, erfolgt eine Hubbewegung des Kolbens 14 im Wasserbehälter 7. Der Wasserbehälter 7 weist im vorliegenden Ausführungsbeispiel einen Wassertank 74 mit einen Behältermantel 70 auf, der von einem oberen Ende, dem Behälterdeckel 71 und einem unteren Ende, dem Behälterboden 72 begrenzt wird. Der Behältermantel 70 kann insbesondere die Form eines Zylinders aufweisen.

Während der Hubbewegung wird der Kolben 14 vom Behälterboden 72 wegbewegt, auf dem der Kolben 14 in seiner Ruhestellung aufliegen kann. Gemäss dem vorliegenden Ausführungsbeispiel ist auch in der Ruhestellung des Kolbens 14 ein Spalt zwischen dem Behälterboden 72 und dem Kolben 14 vorgesehen. Zwischen dem Behälterboden 72 und der Unterseite des Kolbens 14 entsteht daher ein Füllraum, der mit Wasser befüllt wird, wenn sich der Kolben 14 in Richtung des oberen Totpunkts, das heisst, gemäss der vorliegenden Darstellung nach oben, bewegt. Die Ruhestellung des aus den Federelementen 8, 9 bestehenden Federsystems wird gemäss dem vorliegenden Ausführungsbeispiel mit dem unteren Ende der Zahnstange 4 und dem Behälterdeckel 71 definiert. Die Federelemente 8, 9 werden zwischen Kolben 14 und Behälterdeckel 71 vorgespannt und mit Befestigungselementen, beispielsweise Muttern, oberhalb der Zahnstange 4 in Position gehalten.

Im Innenraum des Wasserbehälters 7 ist zwischen der Oberseite des Kolbens 14 und dem Behälterdeckel 71 ein Federelement 8, 9 angeordnet. Das Federelement 8, 9 besteht gemäss dem vorliegenden Ausführungsbeispiel aus einer ersten Spiralfeder 8 und einer zweiten Spiralfeder 9, die konzentrisch zueinander angeordnet sind. In der vorliegenden Darstellung befindet sich die Spiralfeder 9 innerhalb der Spiralfeder 8. Während der Hubbewegung des Kolbens 14 in Richtung des oberen Totpunkts wird das Federelement 8, 9 zusammengedrückt.

Sobald sich der Kolben 14 vom Behälterboden 72 des Wasserbehälters 7 wegbewegt, wird eine Öffnung 73 freigelegt, die mit einem Anschlusselement 22 für kaltes Wasser in fluidleitender Verbindung steht. Wenn zwischen dem Kolben 14 und dem Behälterboden 72 ein Spalt bestehen bleibt, wenn der Kolben sich am unteren Totpunkt befindet, ist die Öffnung 73 nicht dicht. Diese Variante hat den Vorteil, dass der Füllraum gespült werden kann, ohne dass eine Bewegung des Schwenkhebels 1 erforderlich ist. Kaltes Wasser kann in den durch die Hubbewegung des Kolbens 14 entstehenden Füllraum eindringen. Das Anschlusselement 22 kann ein nicht dargestelltes Rückschlagventil enthalten, welches verhindert, dass das kalte Wasser, welches in den Füllraum einströmt, wieder in das Anschlusselement 22 oder die Einlassleitung 37 zurückgedrückt werden kann, wenn der Kolben 14 in seine Ausgangsstellung zurückkehrt, wenn sich das Federelement 8, 9 entspannt. Das Rückschlagventil kann in die Einlassleitung 37 eingefügt sein und mit dem Anschlusselement 22 beispielsweise durch einen Schlauch verbunden sein. Unter Ausgangsstellung wird der untere Totpunkt des Kolbens 14 verstanden. Am oberen Totpunkt des Kolbens weist die Kompression des Federelements 8, 9 ihren Maximalwert auf.

Die Bewegung der Zahnwippe 3, welche erfolgt, wenn ein Benutzer den Schwenkhebel 1 bewegt, wird von einem induktiven Sensor 24 erfasst. Sobald der induktive Sensor 24 eine derartige Bewegung feststellt, wird der Durchlauferhitzer 23 eingeschaltet. Im Durchlauferhitzer 23 erfolgt ein Vorwärmen der darin befindlichen Heizelemente, welche zur Erwärmung der im Durchlauferhitzer 23 befindlichen Flüssigkeit dienen, d.h. insbesondere des Wassers. Das Vorwärmen kann dem Benutzer angezeigt werden, beispielsweise über eine Signalleuchte 13, eine Temperaturanzeige oder ein akustisches Signal. Im vorliegenden Fall ist eine Signalleuchte 13 vorgesehen. Beispielsweise kann die Signalleuchte ein Blinksignal aussenden, bis die gewünschte Temperatur erreicht ist. Die Signalleuchte 13 kann auch dem Benutzer durch eine Änderung der Leuchtfarbe den Fortschritt der Vorwärmung anzeigen.

Die Vorwärmzeit kann insbesondere der Dauer der Hubbewegung des Kolbens 14 im Wesentlichen entsprechen. Der Kolben 14 weist eine umlaufende Dichtung 12 auf und kann einen Gleitring 11 zur Führung des Kolbens 14 umfassen, wobei ein reibungsarmes Gleiten des Kolbens 14 im Behältermantel 70 des Wasserbehälters 7 unterstützt werden kann. Die Dichtung 12 verhindert, dass Wasser in den Raum eindringt, in welchem sich das Federelement 8, 9 befindet. Es können auch eine Mehrzahl derartiger Dichtungen 12 vorgesehen sein, im vorliegenden Ausführungsbeispiel werden zwei Dichtungen 12 verwendet.

Das Wasser wird somit während der Hubbewegung des Kolbens 14 in den Füllraum gesaugt. Es wäre auch gemäss einem nicht dargestellten Ausführungsbeispiel möglich, das Wasser in den Füllraum zu injizieren.

Der Kolbenhub kann mittels eins Hubbegrenzungselements 10 begrenzt werden. Gemäss dem vorliegenden Ausführungsbeispiel ist das Hubbegrenzungselement 10 als ein Rohr ausgebildet, welches auf der Kolbenstange angeordnet ist. Gemäss einem nicht dargestellten Ausführungsbeispiel kann das Hubbegrenzungselement 10 auch als ein Anschlag für den Schwenkhebel 1 ausgebildet sein. Alternativ oder ergänzend hierzu kann das Federelement derart bemessen sein, dass es eine derartig grosse Kraft auf den Kolben ausübt, dass ein weiterer Hub nicht oder nur unter unüblich grosser Kraftanstrengung des Benutzers möglich ist. Das Rohr kann einen Kunststoff enthalten oder aus Kunststoff bestehen. Gemäss dem vorliegenden Ausführungsbeispiel erstreckt sich das Rohr um die Kolbenstange 5 und verläuft innerhalb des Federelements 8, 9.

Sobald der Schwenkhebel 1 vom Benutzer losgelassen wird, entspannt sich das Federelement 8, 9 und der Kolben 14 bewegt sich in seine Ausgangsstellung zurück. Das im Füllraum befindliche Wasser wird in die Ablaufleitung 75 eingespeist, welche zum Durchlauferhitzer 23 führt. Ein Durchflusssensor 15 kann zwischen der Öffnung 73 und dem Einlaufstutzen in den Durchlauferhitzer 23 in der Ablaufleitung 75 angeordnet sein. Der Durchfluss kann vom Durchflusssensor 15 kontinuierlich gemessen werden. Somit kann die für den Durchlauferhitzer notwendige Energiemenge, die erforderlich ist, um die Wassertemperatur konstant zu halten, kontinuierlich berechnet werden.

Im Durchlauferhitzer 23 wird das Wasser auf die Betriebstemperatur aufgeheizt, die für die Zubereitung des heissen Getränks erforderlich ist. Die Betriebstemperatur kann vom Benutzer mittels eines Justierelements 35 (siehe Fig. 2), beispielsweise eines Potentiometers, auf die gewünschte Temperatur eingestellt werden.

Gemäss dem vorliegenden Ausführungsbeispiel weist der Durchlauferhitzer 23 einen beheizten Kanal auf. Die Wärme wird von Heizelementen, die an oder in der Kanalwand angeordnet sind, auf die im Kanal strömende Flüssigkeit übertragen. Die durch den Kanal fliessende Flüssigkeit, insbesondere Wasser, erwärmt sich und erreicht zumindest die Brühtemperatur, wenn es den Durchlauferhitzer 23 über die Warmwasserleitung 77 verlässt. Der Durchlauferhitzer 23 kann dem in Fig. 5 dargestellten Durchlauferhitzer 27 entsprechen. Der Durchlauferhitzer 23 kann sich in seiner Baugrösse vom Durchlauferhitzer 27 unterscheiden. Da für die Verdampfung des Wassers in der Dampferzeugungsvorrichtung 50 mehr Energie benötigt wird, ist der hierfür installierte Durchlauferhitzer 27 grösser als der Durchlauferhitzer 23. Jeder der Durchlauferhitzer 23, 27 weist somit ein Anschlusselement für eine Zulaufleitung, einen Kanal und einen Anschluss für eine Warmwasserleitung 77 oder eine Dampfleitung 26 auf. Der Kanal verläuft zwischen dem Anschlusselement für die Zulaufleitung und dem Anschluss für eine Warmwasserleitung 77 bzw. dem Anschluss für die Dampfleitung 26.

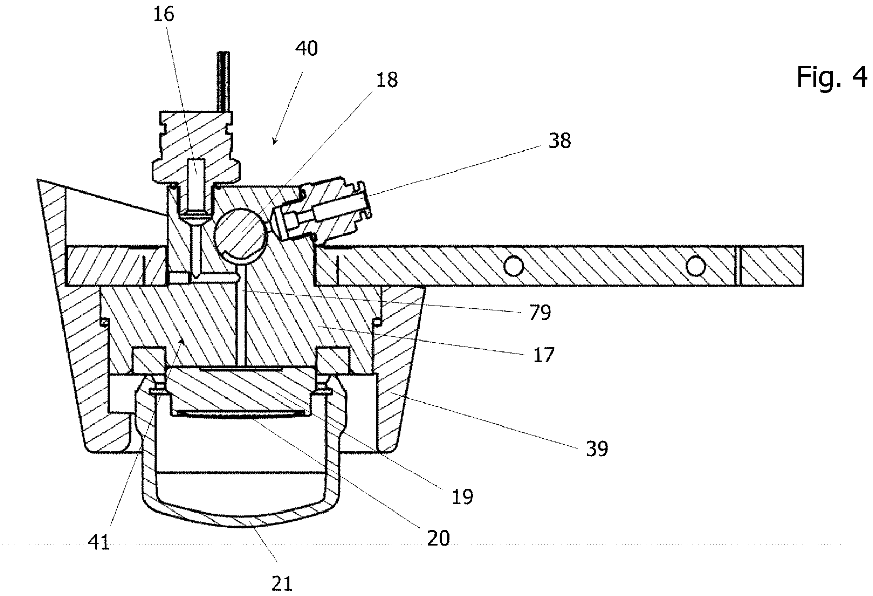

In Fig. 4 ist die Brühvorrichtung 40 in einer Schnittdarstellung gezeigt. Die in Fig. 3 gezeigte Warmwasserleitung 77 steht mit dem Anschlusselement 38 in fluidleitender Verbindung. Sie ist in Fig. 4 weggelassen, daher dort nicht sichtbar. Das Anschlusselement 38 ist am Ventilkörper 17 eines Brühventils 41 angeordnet. Das Brühventil 41 umfasst den Ventilkörper 17 und eine Ventilstange 18. Der Ventilkörper 17 kann insbesondere ein Ventilgehäuse ausbilden. Der Ventilkörper kann PTFE enthalten oder aus PTFE bestehen.

Abhängig von der Stellung der Ventilstange 18 im Ventilkörper 17 kann die Durchflussrate des heissen Wassers verändert werden, das heisst die Durchflussmenge pro Zeiteinheit. Die Stellung der Ventilstange 18 wird mit dem Hebel 45 durch Drehung der Ventilstange 18 verändert. Das Brühventil 41 kann insbesondere für eine Durchflussrate von 2 bis einschliesslich 10 ml/s ausgelegt sein. Gemäss einem Ausführungsbeispiel stehen beispielsweise sechs Positionen zur Verfügung, die mit einer spürbaren Rasterung eingestellt werden können: geschlossen, ca. 2ml/s, 4ml/s, 6ml/s, 8ml/s, 10ml/s.

Das heisse Wasser gelangt durch die Bohrung 79 im Ventilkörper 17 zur Brause 19. Die Brause 19 kann auch als Dusche bezeichnet werden. Die Brause 19 kann PEEK enthalten oder aus PEEK bestehen. Von der Brause 19 wird das heisse Wasser auf das Verteilgitter 20 verteilt. Das heisse Wasser wird dort auf einen Inhaltsstoff für das heisse Getränk, beispielsweise Kaffeepulver, verteilt, welches sich im Trägerelement 21 befindet. Das Trägerelement 21 kann in einer Trägerelementaufnahme 39 lösbar aufgenommen sein. Beispielsweise kann ein Bajonettverschluss vorgesehen sein, um das Trägerelement 21 in der Trägerelementaufnahme 39 aufzunehmen. Das Trägerelement 21 kann ein Sieb enthalten.

Das Wasser wird gemäss dem vorliegenden Ausführungsbeispiel im Spalt oberhalb der Brause 19 auf eine Mehrzahl von Kanälen verteilt. Beispielsweise können in der Brause 19 sechs Kanäle zur Verteilung des heissen Wassers vorgesehen sein. Durch die Kanäle wird das heisse Wasser auf das Verteilgitter 20 geleitet. Die Kanäle in der Brause 19 und im Ventilkörper 17 liegen nicht in der Zeichnungsebene, daher sind sie in der Fig. 4 nicht sichtbar. Das Sieb im Trägerelement 21 ist in Fig. 4 ebenfalls nicht sichtbar. Mittels des Verteilgitters 20 wird das heisse Wasser auf ein Getränkepräparat, beispielsweise Kaffeepulver, verteilt. Gleichzeitig wird durch das Verteilgitter 20 verhindert, dass das Getränkepräparat in die Brühvorrichtung 40 gelangen kann.

Ein Drucksensor 16 ist im Ventilkörper 17 vorgesehen, mittels welchem der Wasserdruck in der Bohrung 79 erfasst werden kann, die zur Brause 19 führt. Mittels des Drucksensors kann gemessen werden, wie der Druck aufgebaut wird, wenn sich der Kolben 14 vom oberen Totpunkt zum unteren Totpunkt bewegt, wobei sich das Federelement 8, 9 entspannt. Dieser Druck ist nicht gleichzusetzen mit dem Druck zwischen dem Brühventil 41 und dem Kolben 14, wenn das Brühventil 41 geschlossen ist. Selbstverständlich ist der Kolben 14 die Ursache für den Druckaufbau. Aber das Getränkepräparat im Trägerelement 21 beeinflusst massgeblich den gemessenen Druckverlauf in der Bohrung 79, da sich die Durchlässigkeit des Schüttgutes, welches vom Getränkepräparat ausgebildet wird, im Verlaufe der Extraktion stark verändert. Zu Beginn gibt es keinen Gegendruck, da zuerst der Leerraum über dem Getränkepräparat langsam geflutet wird. Danach quillt das Getränkepräparat und es beginnen sich Inhaltsstoffe zu lösen. Dies führt zu einem massiv höheren Strömungswiderstand. Erst in diesem Moment wird der Druck im Trägerelement 21 ansteigen. Gegen Ende der Extraktion ist damit zu rechnen, dass der Druck ober- und unterhalb des Brühventils 41 gleich ist.

Wenn der Wasserdruck steigt, kann dies dem Benutzer angezeigt werden, beispielsweise über eine Druckanzeige oder eine Farbänderung einer Signalleuchte. Gemäss einem Ausführungsbeispiel wird der Druckaufbau durch eine Farbänderung der Signalleuchte 13 angezeigt. Alternativ kann der Druckaufbau auf einem Display als Zahlenwert oder in graphischer Form angezeigt werden. Beispielsweise kann der Druckaufbau in Abhängigkeit von der Zeit in einer Grafik auf einem Display dargestellt werden. Das Display kann sich auf der Vorrichtung selbst befinden oder es kann eine drahtlose Verbindung mit einem Anzeigegerät hergestellt werden, auf welchem die vom Drucksensor ermittelten Drucksignale in eine für den Benutzer lesbare Form umgewandelt werden und auf dem Display des Anzeigegeräts angezeigt werden. Bei dem Anzeigegerät kann es sich beispielsweise um einen Monitor, ein Tablet, eine Smartwatch oder ein Smartphone handeln. Alternativ oder ergänzend hierzu kann der zeitliche Verlauf der Farbänderung der Signalleuchte für den Benutzer durch ein periodisches Signal erkennbar sein. Beispielsweise kann die Signalleuchte einen Blinkmodus aufweisen. Insbesondere kann sich die Signalleuchte während des Druckaufbaus oder während des Brühvorgangs im Blinkmodus befinden. Die Periodendauer im Blinkmodus kann beispielsweise eine Sekunde betragen. Das Erreichen des Maximaldrucks kann durch eine weitere Farbänderung der Signalleuchte angezeigt werden. Während des Extraktionsvorgangs kann ein pulsierendes Signal erzeugt werden, welches beispielsweise durch Berechnung mittels eines Prozessors ermittelt wird. Die Periodendauer des pulsierenden Signals kann gemäss einem Ausführungsbeispiel eine Sekunde betragen. Gemäss einem Ausführungsbeispiel beträgt die Frequenz des Signals 60 bpm oder 1 Hz.

Die Ermittlung der Dauer des Extraktionsvorgangs kann somit durch den Benutzer einfach ermittelt werden, indem er die Anzahl der Signale zählt, wobei jedes Signal einer Zeitdauer von 1 Sekunde entspricht.

Wenn der Kolben 14 den maximalen Hub ausführt, kann eine maximale Wassermasse von 85g mit einer einzigen Hubbewegung durch den Durchlauferhitzer 23 und das Brühventil 41 laufen.

Mittels des Brühventils 41 kann der Durchfluss manuell geregelt werden, was nachfolgend als Flowprofiling bezeichnet wird. Für das Flowprofiling wird ausschliesslich das Brühventil 41 genutzt. Der Barista stellt für bestimmte Zeiten verschiedene Ventilpositionen ein, indem er den Hebel 45 betätigt. Beispielsweise kann sich die Stellung des Hebels 45 für 5s auf Pos. 1, dann 3s auf Pos. 4, 10s auf Pos. 2 und für den Rest der Extraktion auf Pos. 6 befinden. Diese Einstellung ist an dieser Stelle nur beispielhaft für eine Vielzahl von Einstellmöglichkeiten für die beiden Parameter Durchfluss und Zeit genannt, welche für das Flowprofiling relevant sind.

Fig. 5 zeigt eine Dampferzeugungsvorrichtung 50 für eine Vorrichtung gemäss einer der vorhergehenden Abbildungen.

Die Dampferzeugung wird durch Betätigung des Schalters 28 ausgelöst. Alternativ kann auch die Dampferzeugung automatisch nach dem Ende der Zubereitung des heissen Getränks erfolgen. Ein für die Dampferzeugung vorgesehener Durchlauferhitzer 27 wird vorgeheizt. Eine Fluidleitung 80 kann vom Wasserbehälter 7 zum Durchlauferhitzer 27 führen, wenn der Wasserbehälter 7 einen Wassertank enthält. Die Fluidleitung 80 kann auch an eine nicht dargestellte Wasserversorgungsleitung angeschlossen sein. Der Durchlauferhitzer 27 kann innerhalb von 3 Sekunden betriebsbereit sein. Das Wasser kann dem Durchlauferhitzer 27 mittels einer Fluidleitung 80 zugeführt werden. Eine Pumpe kann zur Erhöhung des Wasserdrucks eingesetzt werden, was in Fig. 5 nicht dargestellt ist, wenn das Wasser aus dem Wassertank 74 gefördert werden muss. Eine derartige Pumpe kann ebenfalls durch die Betätigung des Schalters 28 in Betrieb genommen werden. Die Fluidleitung 80 kann ein Dampfventil 51 enthalten, welches stromabwärts des Durchlauferhitzers 27 angeordnet ist.

Die Dampferzeugungsvorrichtung 50 umfasst einen Hebel 25 für ein Dampfventil 51. Durch die Betätigung des Hebels 25 kann ein Ventilstössel 32 betätigt werden, welcher in einem Ventilkörper 31 des Dampfventils 51 angeordnet ist. Insbesondere wird mittels des Hebels 25 eine Kurvenscheibe 33 betätigt. Die Kurvenscheibe 33, die am Hebel 25 befestigt ist, insbesondere am Hebel 25 angeflanscht ist, führt eine Drehbewegung aus. Der Ventilstössel 32 steht mit der Oberfläche der Kurvenscheibe 33 in Kontakt, sodass die Drehbewegung der Kurvenscheibe 33 eine Verschiebung des Ventilstössels 32 im Ventilkörper 31 bewirkt, wodurch der Zufluss von Wasser zum Durchlauferhitzer 27 freigegeben wird. Allfälliges im Durchlauferhitzer 27 befindliches Wasser wird hierbei entfernt.

Die durch den Durchlauferhitzer 27 strömende Wassermenge wird kontinuierlich von einem Durchflusssensor 30 gemessen. Die im Durchlauferhitzer 27 benötigte Wärmemenge wird aufgrund der vom Durchflusssensor 30 gemessenen Wassermenge von einem Prozessor berechnet und entsprechend angepasst. Das Wasser verlässt den Durchlauferhitzer 27 im dampfförmigen Zustand, es kann insbesondere vollständig verdampft sein. Der Wasserdampf wird durch eine Dampfleitung 26 geleitet und verlässt diese durch eine Düse 29.

Die Dampfleitung besteht vorzugweise aus einem Material mit niedriger Wärmeleitfähigkeit. Beispielsweise kann die Dampfleitung einen Kunststoff enthalten oder aus Kunststoff bestehen. Die Wasserdampftemperatur kann gemäss einem nicht dargestellten Ausführungsbeispiel auch mittels eines Potentiometers verändert werden.

Der Durchlauferhitzer 27 kann nach einer bestimmten Betriebsdauer automatisch abgeschaltet werden. Beispielsweise kann der Schalter 28 ein nicht rastender Schalter, bzw. Taster, sein, der nach Betätigung gleich wieder in die Ursprungsposition zurückfedert. Mit diesem Schalter 28 sollen nur Impulse getätigt werden. Ein nicht rastender Schalter hat eine Ruheposition, kann aus dieser heraus in eine Schaltposition gebracht werden, federt dann aber selbstständig wieder in die Ruheposition zurück. Ein Vorteil eines Systems, welches einen nicht rastenden Schalter enthält, liegt in der Einsparung elektrischer Energie. Mit einem nicht rastenden Schalter kann das automatische Abschalten nach einer bestimmten Zeitspanne erzwungen werden, wobei diese Zeitspanne sehr kurz bemessen sein kann.

Anstelle eines nicht-rastenden Schalters kann ein Schalter verwendet werden, mittels welchem mittels der Dampferzeugungsvorrichtung 50 anstelle von Dampf Heisswasser bereitgestellt werden kann, beispielsweise für die Zubereitung von Teegetränken.

Gemäss einem nicht dargestellten Ausführungsbeispiel kann der Durchlauferhitzer 27 manuell durch Betätigung des Schalters 28 durch den Benutzer abgeschaltet werden, das heisst, die Energiezufuhr zu den Heizelementen des Durchlauferhitzers unterbrochen werden. Auch eine allfällige Pumpe kann automatisch oder durch Betätigung des Schalters 28 abgeschaltet werden. Insbesondere kann der Durchlauferhitzer 27 und/oder die Pumpe durch einen Impuls des Schalters 28 eingeschaltet oder ausgeschaltet werden.

Ein Anzeigeelement 34 kann zur Anzeige des Betriebszustandes der Dampferzeugungsvorrichtung 50 vorgesehen sein, siehe Fig. 1. Beispielsweise kann das Anzeigeelement 34 als eine Kontrollleuchte oder Signalleuchte ausgebildet sein. Das Anzeigeelement 34 kann beispielsweise leuchten, wenn die Dampferzeugungsvorrichtung 50 in Betrieb ist.

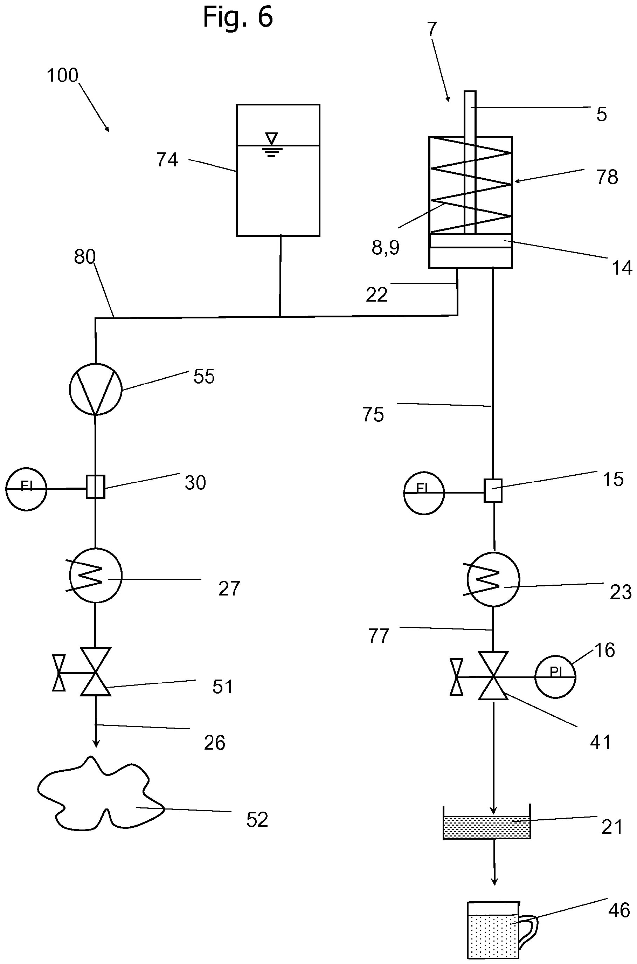

Fig. 6 zeigt ein Fliessschema für ein in einer Vorrichtung 100 gemäss einem der vorhergehenden Ausführungsbeispiele durchgeführtes Verfahren zur Zubereitung eines heissen Getränks 46 oder der Zubereitung von Dampf 52.

Die vorliegende Vorrichtung 100 weist einen Wasserbehälter 7 auf, der einen Wassertank 74 und einem Druckbehälter 78 umfasst. Der Druckbehälter 78 kann als Zylinder ausgebildet sein. Im Druckbehälter 78 ist ein Kolben 14 verschiebbar, der gemäss einem der vorhergehenden Ausführungsbeispiele ausgestaltet sein kann. Der Kolben 14 ist mit einer Kolbenstange 5 verbunden, mittels welcher der Kolben 14 im Druckbehälter 78 verschiebbar ist. Der Kolben 14 unterteilt den Innenraum des Druckbehälters 78 in einen Füllraum und einen Leerraum. Der Füllraum kann mit Wasser aus dem Wassertank 74 befüllt werden. Der Leerraum kann eines oder mehrere Federelemente 8, 9 enthalten.

Der Füllraum enthält ein Anschlusselement für Wasser, welches über eine Zuleitung vom Wassertank in den Füllraum gelangen kann. Das Wasser wird insbesondere weder im Wassertank noch in der Zuleitung noch im Anschlusselement 22 erwärmt. Das Wasser wird aus dem Füllraum ausgeschoben, wenn sich der Kolben 14 in Richtung des unteren Totpunkts bewegt und somit das Volumen des Füllraums abnimmt. Vom Füllraum gelangt das Wasser in die Ablaufleitung 75, welche zum Durchlauferhitzer 23 führt. In der Ablaufleitung 75 befindet sich ein Durchflusssensor 15, mittels welchem der Durchfluss in der Ablaufleitung 75 gemessen werden kann. Im Durchlauferhitzer 23 wird das Wasser auf die Brühtemperatur erhitzt. Die Brühtemperatur kann vom Benutzer über ein Justierelement 35 (siehe Fig. 2) voreingestellt werden. Das im Durchlauferhitzer 23 erzeugte heisse Wasser wird über die Warmwasserleitung 77 der Brühvorrichtung 40 zugeführt.

Die Brühvorrichtung 40 umfasst ein Brühventil 41. Das Brühventil 41 kann vom Benutzer manuell betätigt werden, beispielsweise mittels des in Fig. 2 gezeigten Hebels 45. Das Brühventil weist einen Drucksensor 16 auf, mittels welchem der Druck des sich im Brühventil 41 befindlichen heissen Wasser gemessen werden kann. Der vom Drucksensor 16 gemessene Druck kann dem Benutzer angezeigt werden, beispielsweise mit der in Fig. 1 gezeigten Signalleuchte. Der Benutzer kann den Durchfluss des heissen Wassers durch das Brühventil 41 entsprechend dem angezeigten Druck verändern, um die Zubereitung des heissen Getränks mit dem gewünschten Druck zu ermöglichen. Das heisse Wasser wird vom Brühventil 41 zu einem Trägerelement 21, beispielsweise einem Filterträger oder Siebträger, geleitet. Im Trägerelement 21 befindet sich ein Getränkepräparat, beispielsweise Kaffeepulver, sodass ein heisses Getränk 46 zubereitet werden kann, beispielsweise durch Extraktion oder Auflösen von Bestandteilen des Getränkepräparats im heissen Wasser.

Alternativ kann mit der Vorrichtung 100 Wasserdampf erzeugt werden. Zur Erzeugung von Wasserdampf kann kaltes Wasser aus dem Wasserbehälter 7 entnommen werden, insbesondere aus dem Wassertank 74 gemäss dem vorliegenden Ausführungsbeispiel.

Das kalte Wasser wird in einer Fluidleitung 80 zu einem Durchlauferhitzer 27 geleitet. Eine Pumpe 55 kann in der Fluidleitung 80 angeordnet sein. Ein Durchflusssensor 30 kann ebenfalls in der Fluidleitung 80 angeordnet sein, insbesondere zwischen der Pumpe 55 und dem Durchlauferhitzer 27.

Das kalte Wasser wird im Durchlauferhitzer 27 zur Verdampfung gebracht. Der im Durchlauferhitzer 27 erzeugte Dampf wird durch ein Dampfventil 51 in eine Dampfleitung 26 eingespeist. Die Dampfleitung 26 kann in eine Düse münden, aus welcher der Dampf 52 austritt.

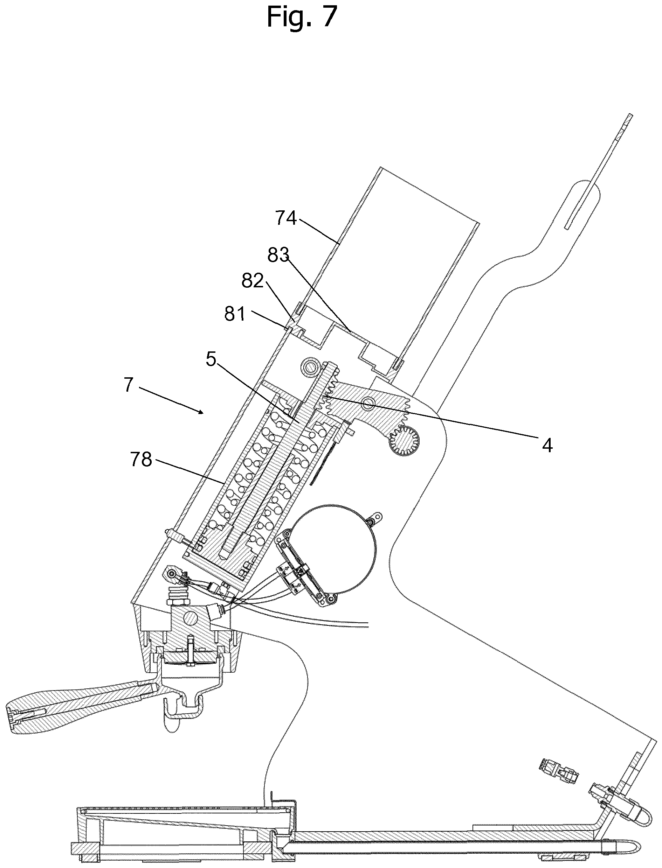

Fig. 7 zeigt ein Ausführungsbeispiel einer Vorrichtung 100, gemäss welcher der Wasserbehälter 7 einen Wassertank 74 und einem Druckbehälter 78 enthält. Der Wassertank 74 ist oberhalb des Druckbehälters 78 angeordnet. Der Druckbehälter 78 weist dieselbe Bauweise wie der Druckbehälter 78 gemäss Fig. 3 auf, sodass für den Druckbehälter auf die Beschreibung zu Fig. 3 verwiesen werden kann. Der Wassertank 74 weist einen Vorratsbehälterboden 82 auf, welcher ein Eingriffselement 81 aufweisen kann, welches zur formschlüssigen Verbindung mit dem Behältermantel 70 des Druckbehälters dient. Das Eingriffselement 81 kann beispielsweise als eine Nut ausgebildet sein. Das Eingriffselement 81 kann auch einen Zapfen umfassen. Insbesondere können eine Mehrzahl von Zapfen vorgesehen sein. Der Zapfen kann an seinem unteren Ende einen Magneten enthalten oder ein Metallelement, welches von einem am Druckbehälter 78 befindlichen Magneten angezogen werden kann, damit der Wassertank 74 sich nicht bewegen kann.

Der Vorratsbehälterboden 82 kann auf der dem Druckbehälter 78 zugewendeten Unterseite eine Vertiefung 83 aufweisen. Die Vertiefung 83 dient zur Schaffung eines ausreichenden Freiraums für die Bewegung der Zahnstange 4 sowie der Kolbenstange 5. Der Wassertank 74 kann auf der Oberseite offen sein oder durch einen Deckel verschliessbar sein, was in Fig. 1 oder Fig. 2 gezeigt ist.

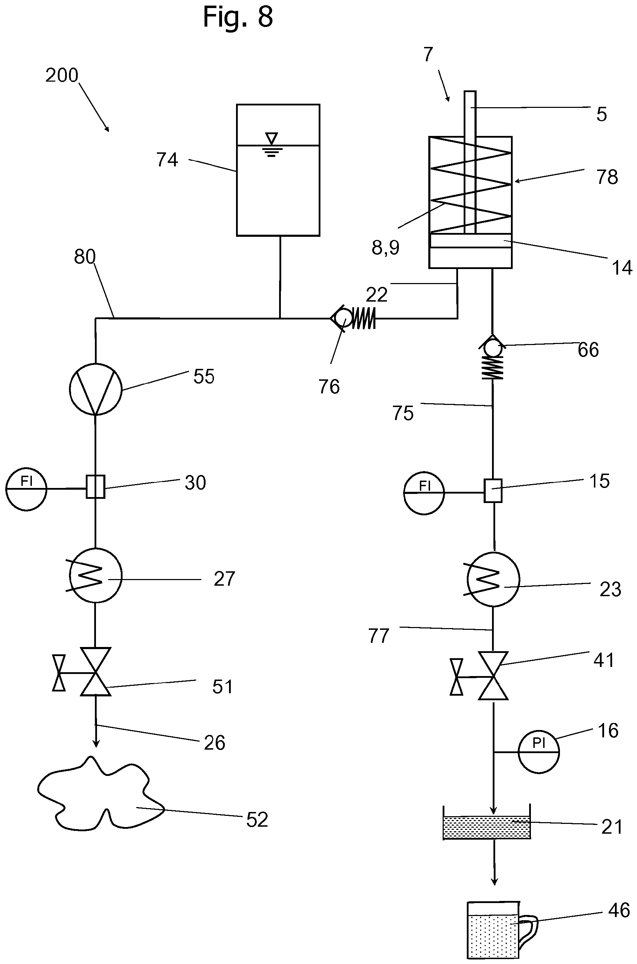

Fig. 8 zeigt ein Fliessschema für ein in einer Vorrichtung 200 gemäss einem der vorhergehenden Ausführungsbeispiele durchgeführtes Verfahren zur Zubereitung eines heissen Getränks 46 oder der Zubereitung von Dampf 52. Die vorliegende Vorrichtung 200 weist einen Wasserbehälter 7 auf, der einen Wassertank 74 und einem Druckbehälter 78 enthält. Der Druckbehälter 78 kann als Zylinder ausgebildet sein. Gemäss diesem Ausführungsbeispiel ist ein Rückschlagventil 76 zwischen dem Druckbehälter 78 und dem Wassertank 74 angeordnet. Im Druckbehälter 78 ist ein Kolben 14 verschiebbar, der gemäss einem der vorhergehenden Ausführungsbeispiele ausgestaltet sein kann. Der Kolben 14 ist mit einer Kolbenstange 5 verbunden, mittels welcher der Kolben 14 im Druckbehälter 78 verschiebbar ist. Der Kolben 14 unterteilt den Innenraum des Druckbehälters 78 in einen Füllraum und einen Leerraum. Der Füllraum kann mit Wasser aus dem Wassertank 74 befüllt werden. Der Leerraum kann eines oder mehrere Federelemente 8, 9 enthalten.

Der Füllraum enthält ein Anschlusselement für Wasser, welches über eine Zuleitung vom Wassertank in den Füllraum gelangen kann. Das Wasser wird insbesondere weder im Wassertank noch in der Zuleitung noch im Anschlusselement 22 erwärmt. Das Wasser wird aus dem Füllraum ausgeschoben, wenn sich der Kolben 14 in Richtung des unteren Totpunkts bewegt und somit das Volumen des Füllraums abnimmt.

Vom Füllraum gelangt das Wasser in die Ablaufleitung 75, welche zum Durchlauferhitzer 23 führt. In der Ablaufleitung 75 befindet sich ein Durchflusssensor 15, mittels welchem der Durchfluss in der Ablaufleitung 75 gemessen werden kann. In der Ablaufleitung 75 kann zwischen dem Füllraum und dem Durchflusssensor 15 ein Rückschlagventil 66 angeordnet sein. Dieses Rückschlagventil 66 kann gemäss einem nicht dargestellten Ausführungsbeispiel weggelassen werden. Im Durchlauferhitzer 23 wird das Wasser auf die Brühtemperatur erhitzt. Die Brühtemperatur kann vom Benutzer über ein Justierelement 35 (siehe Fig. 2) voreingestellt werden. Das im Durchlauferhitzer 23 erzeugte heisse Wasser wird über die Warmwasserleitung 77 der Brühvorrichtung 40 zugeführt.

Die Brühvorrichtung 40 umfasst ein Brühventil 41. Das Brühventil 41 kann vom Benutzer manuell betätigt werden, beispielsweise mittels des in Fig. 2 gezeigten Hebels 45. Gemäss diesem Ausführungsbeispiel ist ein Drucksensor 16 zwischen dem Brühventil 41 und dem Trägerelement 21 angeordnet, mittels welchem der Druck des sich oberhalb des Trägerelements 21 befindlichen heissen Wassers gemessen werden kann. Der vom Drucksensor 16 gemessene Druck kann dem Benutzer angezeigt werden, beispielsweise mit der in Fig. 1 gezeigten Signalleuchte. Der Benutzer kann den Durchfluss des heissen Wassers durch das Brühventil 41 entsprechend dem angezeigten Druck verändern, um die Zubereitung des heissen Getränks mit dem gewünschten Druck zu ermöglichen. Das heisse Wasser wird vom Brühventil 41 zu einem Trägerelement 21, beispielsweise einem Filterträger oder Siebträger, geleitet. Im Trägerelement 21 befindet sich ein Getränkepräparat, beispielsweise Kaffeepulver, sodass ein heisses Getränk 46 zubereitet werden kann, beispielsweise durch Extraktion oder Auflösen von Bestandteilen des Getränkepräparats im heissen Wasser.

Alternativ kann mit der Vorrichtung 200 Wasserdampf erzeugt werden. Zur Erzeugung von Wasserdampf kann kaltes Wasser aus dem Wasserbehälter 7 entnommen werden, insbesondere aus dem Wassertank 74 gemäss dem vorliegenden Ausführungsbeispiel. Das kalte Wasser wird in einer Fluidleitung 80 zu einem Durchlauferhitzer 27 geleitet. Eine Pumpe 55 kann in der Fluidleitung 80 angeordnet sein. Ein Durchflusssensor 30 kann ebenfalls in der Fluidleitung 80 angeordnet sein, insbesondere zwischen der Pumpe 55 und dem Durchlauferhitzer 27. Das kalte Wasser wird im Durchlauferhitzer 27 zur Verdampfung gebracht. Der im Durchlauferhitzer 27 erzeugte Dampf wird durch ein Dampfventil 51 in eine Dampfleitung 26 eingespeist. Die Dampfleitung 26 kann in eine Düse münden, aus welcher der Dampf 52 austritt.

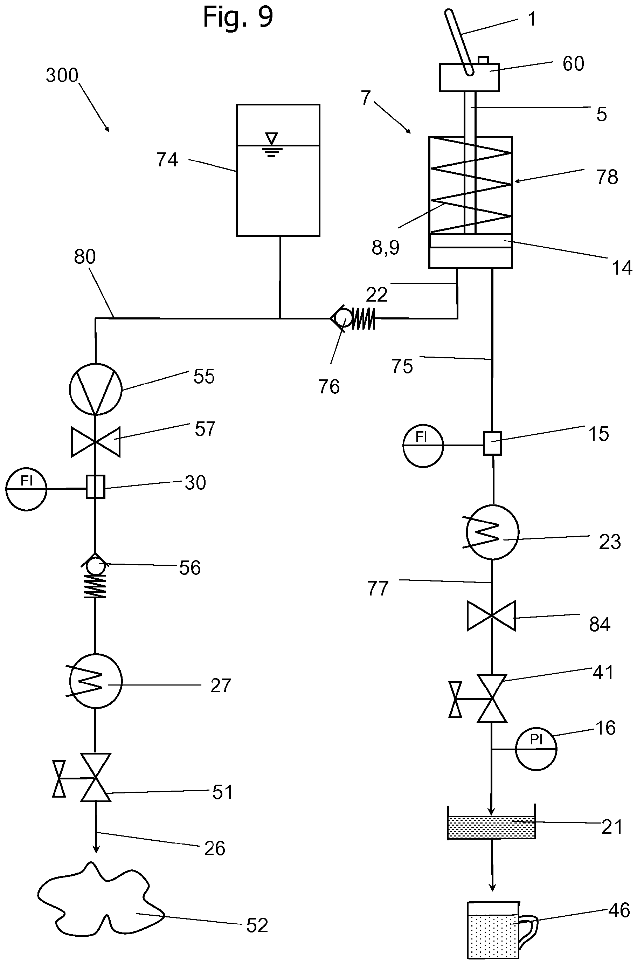

Fig. 9 zeigt ein Fliessschema für ein in einer Vorrichtung 300 gemäss einem der vorhergehenden Ausführungsbeispiele durchgeführtes Verfahren zur Zubereitung eines heissen Getränks 46 oder der Zubereitung von Dampf 52.

Die vorliegende Vorrichtung 300 weist einen Wasserbehälter 7 auf, der einen Wassertank 74 und einem Druckbehälter 78 enthält. Der Druckbehälter 78 kann als Zylinder ausgebildet sein. Gemäss diesem Ausführungsbeispiel ist ein Rückschlagventil 76 zwischen dem Druckbehälter 78 und dem Wassertank 74 angeordnet. Im Druckbehälter 78 ist ein Kolben 14 verschiebbar, der gemäss einem der vorhergehenden Ausführungsbeispiele ausgestaltet sein kann. Der Kolben 14 ist mit einer Kolbenstange 5 verbunden, mittels welcher der Kolben 14 im Druckbehälter 78 verschiebbar ist. Insbesondere kann die Kolbenstange 5 über ein Getriebe 60 mit einem Schwenkhebel 1 verbunden sein, wie in den vorhergehenden Ausführungsbeispielen beschrieben.

Der Kolben 14 unterteilt den Innenraum des Druckbehälters 78 in einen Füllraum und einen Leerraum. Der Füllraum kann mit Wasser aus dem Wassertank 74 befüllt werden. Der Leerraum kann eines oder mehrere Federelemente 8, 9 enthalten. Der Füllraum enthält ein Anschlusselement für Wasser, welches über eine Zuleitung vom Wassertank 74 in den Füllraum gelangen kann. Das Wasser wird insbesondere weder im Wassertank noch in der Zuleitung noch im Anschlusselement 22 erwärmt. Das Wasser wird aus dem Füllraum ausgeschoben, wenn sich der Kolben 14 in Richtung des unteren Totpunkts bewegt und somit das Volumen des Füllraums abnimmt.

Vom Füllraum gelangt das Wasser in die Ablaufleitung 75, welche zum Durchlauferhitzer 23 führt. In der Ablaufleitung 75 befindet sich ein Durchflusssensor 15, mittels welchem der Durchfluss in der Ablaufleitung 75 gemessen werden kann. Im Durchlauferhitzer 23 wird das Wasser auf die Brühtemperatur erhitzt. Die Brühtemperatur kann vom Benutzer über ein Justierelement 35 (siehe Fig. 2) voreingestellt werden. Das im Durchlauferhitzer 23 erzeugte heisse Wasser wird über die Warmwasserleitung 77 der Brühvorrichtung 40 zugeführt. In der Warmwasserleitung 77 ist gemäss diesem Ausführungsbeispiel ein Überdruckventil 84 zwischen dem Durchlauferhitzer 23 und dem Brühventil 41 angeordnet.

Die Brühvorrichtung 40 umfasst ein Brühventil 41. Das Brühventil 41 kann vom Benutzer manuell betätigt werden, beispielsweise mittels des in Fig. 2 gezeigten Hebels 45. Gemäss diesem Ausführungsbeispiel ist ein Drucksensor 16 zwischen dem Brühventil 41 und dem Trägerelement 21 angeordnet, mittels welchem der Druck des sich oberhalb des Trägerelements 21 befindlichen heissen Wassers gemessen werden kann. Der vom Drucksensor 16 gemessene Druck kann dem Benutzer angezeigt werden, beispielsweise mit der in Fig. 1 gezeigten Signalleuchte. Der Benutzer kann den Durchfluss des heissen Wassers durch das Brühventil 41 entsprechend dem angezeigten Druck verändern, um die Zubereitung des heissen Getränks mit dem gewünschten Druck zu ermöglichen. Das heisse Wasser wird vom Brühventil 41 zu einem Trägerelement 21, beispielsweise einem Filterträger oder Siebträger, geleitet. Im Trägerelement 21 befindet sich ein Getränkepräparat, beispielsweise Kaffeepulver, sodass ein heisses Getränk 46 zubereitet werden kann, beispielsweise durch Extraktion oder Auflösen von Bestandteilen des Getränkepräparats im heissen Wasser.

Alternativ kann mit der Vorrichtung 300 Wasserdampf erzeugt werden. Zur Erzeugung von Wasserdampf kann kaltes Wasser aus dem Wasserbehälter 7 entnommen werden, insbesondere aus dem Wassertank 74 gemäss dem vorliegenden Ausführungsbeispiel. Das kalte Wasser wird in einer Fluidleitung 80 zu einem Durchlauferhitzer 27 geleitet. Eine Pumpe 55 kann in der Fluidleitung 80 angeordnet sein. Ein Durchflusssensor 30 kann ebenfalls in der Fluidleitung 80 angeordnet sein, insbesondere zwischen der Pumpe 55 und dem Durchlauferhitzer 27. Zwischen der Pumpe 55 und dem Durchflusssensor 30 kann ein Magnetventil 57 angeordnet werden. Zwischen dem Durchflusssensor 30 und dem Durchlauferhitzer 27 ist gemäss diesem Ausführungsbeispiel ein Rückschlagventil 56 angeordnet.

Das kalte Wasser wird im Durchlauferhitzer 27 zur Verdampfung gebracht. Der im Durchlauferhitzer 27 erzeugte Dampf wird durch ein Dampfventil 51 in eine Dampfleitung 26 eingespeist. Die Dampfleitung 26 kann in eine Düse münden, aus welcher der Dampf 52 austritt. Die Dampferzeugungsvorrichtung 50, siehe Fig. 5, kann einen Schalter 28 umfassen, mittels welchem der Durchlauferhitzer 27 eingeschaltet werden kann, wenn der am Dampfventil 51 angebrachte Hebel 25 betätigt wird. Alternativ kann eine Dampferzeugungsvorrichtung 150 vorgesehen werden, wie nachfolgend beschrieben.

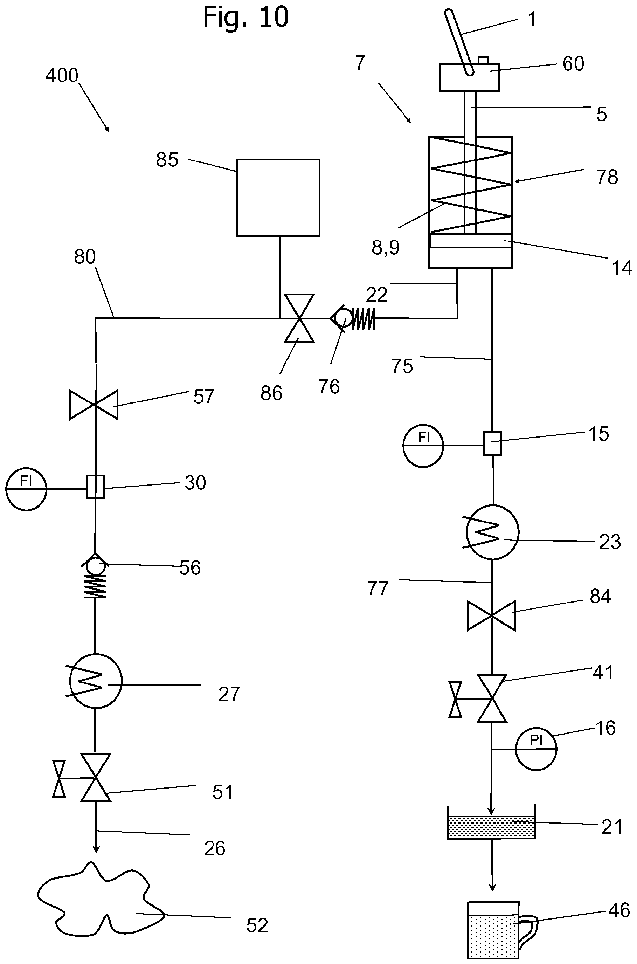

Fig. 10 zeigt ein Fliessschema für ein in einer Vorrichtung 400 gemäss einem der vorhergehenden Ausführungsbeispiele durchgeführtes Verfahren zur Zubereitung eines heissen Getränks 46 oder der Zubereitung von Dampf 52. Die vorliegende Vorrichtung 400 weist einen Wasserbehälter 7 auf, der eine Wasserversorgungsleitung 85 und einem Druckbehälter 78 enthält. Der Druckbehälter 78 kann als Zylinder ausgebildet sein. Gemäss diesem Ausführungsbeispiel ist ein Rückschlagventil 76 zwischen dem Druckbehälter 78 und der Wasserversorgungsleitung 85 angeordnet. Zudem ist ein Magnetventil 86 zwischen dem Rückschlagventil 76 und der Wasserversorgungsleitung 85 angeordnet. Das Magnetventil 86 muss geöffnet werden, sobald der Schwenkhebel 1 betätigt wird, um die Federelemente 8, 9 zu spannen. Im Druckbehälter 78 ist als Folge der Betätigung des Schwenkhebels 1 ein Kolben 14 verschiebbar, der gemäss einem der vorhergehenden Ausführungsbeispiele ausgestaltet sein kann. Der Kolben 14 ist mit einer Kolbenstange 5 verbunden, mittels welcher der Kolben 14 im Druckbehälter 78 verschiebbar ist. Insbesondere kann die Kolbenstange 5 über ein Getriebe 60 mit einem Schwenkhebel 1 verbunden sein, wie in den vorhergehenden Ausführungsbeispielen beschrieben.

Der Kolben 14 unterteilt den Innenraum des Druckbehälters 78 in einen Füllraum und einen Leerraum. Der Füllraum kann mit Wasser aus der Wasserversorgungsleitung 85 befüllt werden. Der Leerraum kann eines oder mehrere Federelemente 8, 9 enthalten. Der Füllraum enthält ein Anschlusselement für Wasser, welches über eine Zuleitung von der Wasserversorgungsleitung 85 in den Füllraum gelangen kann. Das Wasser wird insbesondere weder in der Wasserversorgungsleitung 85 noch in der Zuleitung noch im Anschlusselement 22 erwärmt. Das Wasser wird aus dem Füllraum ausgeschoben, wenn sich der Kolben 14 in Richtung des unteren Totpunkts bewegt und somit das Volumen des Füllraums abnimmt.

Vom Füllraum gelangt das Wasser in die Ablaufleitung 75, welche zum Durchlauferhitzer 23 führt. In der Ablaufleitung 75 befindet sich ein Durchflusssensor 15, mittels welchem der Durchfluss in der Ablaufleitung 75 gemessen werden kann. Im Durchlauferhitzer 23 wird das Wasser auf die Brühtemperatur erhitzt. Die Brühtemperatur kann vom Benutzer über ein Justierelement 35 (siehe Fig. 2) voreingestellt werden. Das im Durchlauferhitzer 23 erzeugte heisse Wasser wird über die Warmwasserleitung 77 der Brühvorrichtung 40 zugeführt. In der Warmwasserleitung 77 ist gemäss diesem Ausführungsbeispiel ein Überdruckventil 84 zwischen dem Durchlauferhitzer 23 und dem Brühventil 41 angeordnet.

Die Brühvorrichtung 40 umfasst ein Brühventil 41. Das Brühventil 41 kann vom Benutzer manuell betätigt werden, beispielsweise mittels des in Fig. 2 gezeigten Hebels 45. Gemäss diesem Ausführungsbeispiel ist ein Drucksensor 16 zwischen dem Brühventil 41 und dem Trägerelement 21 angeordnet, mittels welchem der Druck des sich oberhalb des Trägerelements 21 befindlichen heissen Wassers gemessen werden kann. Der vom Drucksensor 16 gemessene Druck kann dem Benutzer angezeigt werden, beispielsweise mit der in Fig. 1 gezeigten Signalleuchte. Der Benutzer kann den Durchfluss des heissen Wassers durch das Brühventil 41 entsprechend dem angezeigten Druck verändern, um die Zubereitung des heissen Getränks mit dem gewünschten Druck zu ermöglichen. Das heisse Wasser wird vom Brühventil 41 zu einem Trägerelement 21, beispielsweise einem Filterträger oder Siebträger, geleitet. Im Trägerelement 21 befindet sich ein Getränkepräparat, beispielsweise Kaffeepulver, sodass ein heisses Getränk 46 zubereitet werden kann, beispielsweise durch Extraktion oder Auflösen von Bestandteilen des Getränkepräparats im heissen Wasser.

Alternativ kann mit der Vorrichtung 400 Wasserdampf erzeugt werden. Zur Erzeugung von Wasserdampf kann kaltes Wasser aus dem Wasserbehälter 7 entnommen werden, insbesondere von der Wasserversorgungsleitung 85 gemäss dem vorliegenden Ausführungsbeispiel.

Das kalte Wasser wird in einer Fluidleitung 80 zu einem Durchlauferhitzer 27 geleitet. Ein Durchflusssensor 30 kann ebenfalls in der Fluidleitung 80 angeordnet sein, insbesondere zwischen der Wasserversorgungsleitung 85 und dem Durchlauferhitzer 27. Zwischen der Wasserversorgungsleitung 85 und dem Durchflusssensor 30 kann ein Magnetventil 57 angeordnet werden. Zwischen dem Durchflusssensor 30 und dem Durchlauferhitzer 27 ist gemäss diesem Ausführungsbeispiel ein Rückschlagventil 56 angeordnet.

Das kalte Wasser wird im Durchlauferhitzer 27 zur Verdampfung gebracht. Der im Durchlauferhitzer 27 erzeugte Dampf wird durch ein Dampfventil 51 in eine Dampfleitung 26 eingespeist. Die Dampfleitung 26 kann in eine Düse münden, aus welcher der Dampf 52 austritt. Die Dampferzeugungsvorrichtung 50, siehe Fig. 5, kann einen Schalter 28 umfassen, mittels welchem der Durchlauferhitzer 27 eingeschaltet werden kann, wenn der am Dampfventil 51 angebrachte Hebel 25 betätigt wird. Alternativ kann eine Dampferzeugungsvorrichtung 150 vorgesehen werden, wie nachfolgend beschrieben.

Die beiden Ausführungsbeispiele gemäss Fig. 9 und Fig. 10 können in derselben Vorrichtung angeordnet sein, sodass die Vorrichtung alternativ über einen Wassertank 74 oder eine Wasserversorgungsleitung 85 mit Wasser versorgt werden kann. Für Bauelemente, für welche eine elektrische Ansteuerung vorgesehen ist, wird diese immer ausgelöst, sodass für jedes der vorgenannten Ausführungsbeispiele dasselbe Steuerungsprogramm verwendet werden kann.

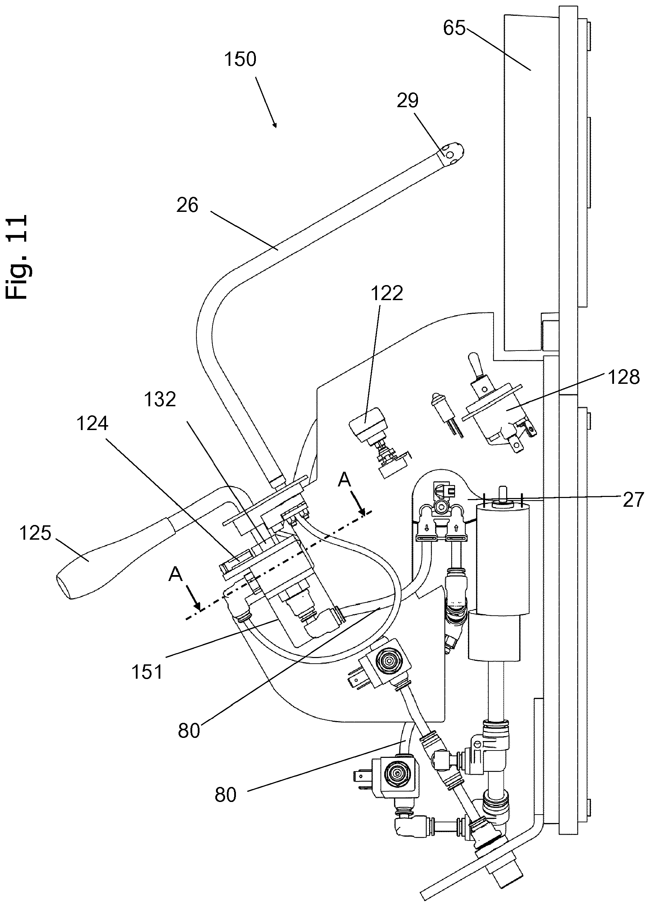

Fig. 11 zeigt eine Ansicht einer Variante für eine Dampferzeugungsvorrichtung 150. Die Dampferzeugung wird durch Betätigung des Schalters 128 ausgelöst. Alternativ kann auch die Dampferzeugung automatisch nach dem Ende der Zubereitung des heissen Getränks erfolgen. Wie in einer der Fig. 8 bis Fig. 10 gezeigt ist, wird ein für die Dampferzeugung vorgesehener Durchlauferhitzer 27 vorgeheizt. Eine Fluidleitung 80 kann vom Wasserbehälter 7 zum Durchlauferhitzer 27 führen, wenn der Wasserbehälter 7 einen Wassertank 74 oder eine Wasserversorgungsleitung 85 enthält. Der Durchlauferhitzer 27 kann innerhalb von 3 Sekunden betriebsbereit sein. Das Wasser kann dem Durchlauferhitzer 27 mittels der Fluidleitung 80 zugeführt werden. Eine Pumpe kann zur Erhöhung des Wasserdrucks eingesetzt werden, wenn das Wasser aus dem Wassertank 74 gefördert werden muss. Eine derartige Pumpe kann ebenfalls durch die Betätigung des Schalters 128 in Betrieb genommen werden. Die Fluidleitung 80 kann ein Dampfventil 151 enthalten, welches stromabwärts des Durchlauferhitzers 27 angeordnet ist.

Die Dampferzeugungsvorrichtung 150 umfasst einen Hebel 125 für das Dampfventil 151. Durch die Betätigung des Hebels 125 kann eine Hohlventilwelle 132 betätigt werden, welche in einem Ventilkörper 131 des Dampfventils 151 angeordnet ist. Insbesondere wird mittels des Hebels 125 eine Drehbewegung der Hohlventilwelle 132 eingeleitet. Auf dem Ende der Hohlventilwelle 132, welches gegenüberliegend zum Hebel 125 angeordnet ist, befindet sich der Dampfeinlass, das heisst der Teil der Fluidleitung 80, der vom Durchlauferhitzer 27 zum Dampfventil 151 führt.

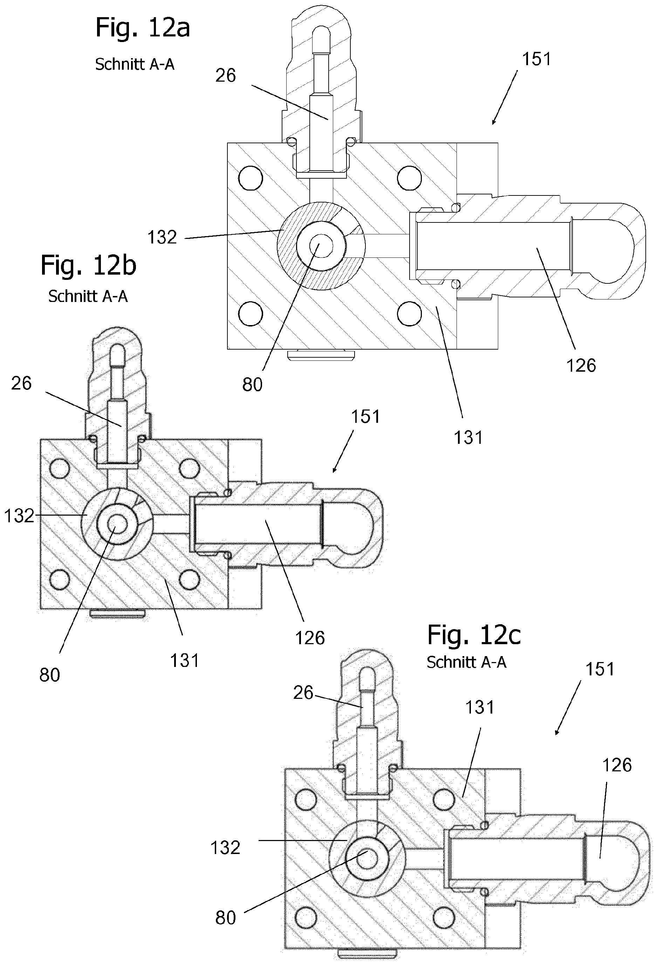

Die Hohlventilwelle 132 weist Öffnungen auf, die mit der Dampfleitung 26 oder einer in Fig. 11 nicht dargestellten Abflussleitung in fluidleitendem Kontakt sind, sodass durch die Drehbewegung der Hohlventilwelle 132 eine fluidleitende Verbindung vom Zufluss vom Durchlauferhitzer 27 zu der Dampfleitung 26 oder der Abflussleitung 126, siehe Fig. 12a-c, freigegeben werden kann. Der Wasserdampf kann durch die Dampfleitung 26 geleitet werden und verlässt diese durch eine Düse 29 oder kann durch die Abflussleitung 126 abgelassen werden.

Die durch den Durchlauferhitzer 27 strömende Wassermenge wird kontinuierlich von einem Durchflusssensor 30 gemessen. Die im Durchlauferhitzer 27 benötigte Wärmemenge wird aufgrund der vom Durchflusssensor 30 gemessenen Wassermenge von einem Prozessor berechnet und entsprechend angepasst. Für die Bereitstellung von Dampf verlässt das Wasser den Durchlauferhitzer 27 im dampfförmigen Zustand, es kann insbesondere vollständig verdampft sein.

Die Dampfleitung 26 besteht vorzugweise aus einem Material mit niedriger Wärmeleitfähigkeit. Beispielsweise kann die Dampfleitung 26 einen Kunststoff enthalten oder aus Kunststoff bestehen. Die Wasserdampftemperatur kann gemäss mittels eines Potentiometers 122 eingestellt und/oder verändert werden. Mittels des Potentiometers 122 kann auch die Temperatur des heissen Wassers, das über die Dampfleitung 26 bezogen wird, stufenlos in einem bestimmten Bereich eingestellt werden. Somit können mittels der Dampferzeugungsvorrichtung auch Getränke zubereitet werden, für welche heisses Wasser unterschiedlicher Temperatur erforderlich ist, beispielsweise zur Zubereitung von Tee. Zudem kann mit dem Potentiometer 122 auch die Dampftemperatur eingestellt werden.

Der Durchlauferhitzer 27 kann nach einer bestimmten Betriebsdauer automatisch abgeschaltet werden. Beispielsweise kann der Schalter 128 ein nicht rastender Schalter, bzw. Taster, sein, der nach Betätigung gleich wieder in die Ursprungsposition zurückfedert. Mit diesem nicht-rastenden Schalter 128 können gemäss einem nicht dargestellten Ausführungsbeispiel nur Impulse getätigt werden. Ein nicht rastender Schalter hat eine Ruheposition, kann aus dieser heraus in eine Schaltposition gebracht werden, federt dann aber selbstständig wieder in die Ruheposition zurück. Ein Vorteil eines Systems, welches einen nicht rastenden Schalter enthält, liegt in der Einsparung elektrischer Energie. Mit einem nicht rastenden Schalter kann das automatische Abschalten nach einer bestimmten Zeitspanne erzwungen werden, wobei diese Zeitspanne sehr kurz bemessen sein kann.

Anstelle eines nicht-rastenden Schalters kann ein Schalter 128 verwendet werden, mittels welchem mittels der Dampferzeugungsvorrichtung 50 anstelle von Dampf Heisswasser bereitgestellt werden kann, beispielsweise für die Zubereitung von Teegetränken.

Gemäss einem nicht dargestellten Ausführungsbeispiel kann der Durchlauferhitzer 27 manuell durch Betätigung des Schalters 128 durch den Benutzer abgeschaltet werden, das heisst, die Energiezufuhr zu den Heizelementen des Durchlauferhitzers unterbrochen werden. Auch eine allfällige Pumpe kann automatisch oder durch Betätigung des Schalters 128 abgeschaltet werden. Insbesondere kann der Durchlauferhitzer 27 und/oder die Pumpe durch einen Impuls des Schalters 128 eingeschaltet oder ausgeschaltet werden.

Der Schalter 128 ist gemäss diesem Ausführungsbeispiel als Kipphebelschalter ausgebildet, der in zwei Positionen ruhen kann. Mit der entsprechenden Position wird ausgewählt, welcher Betriebsmodus von der Dampferzeugungsvorrichtung 150 genutzt werden soll. Im Betriebsmodus "Automatik" wird das Wasser im Durchlauferhitzer 27 automatisch nach dem Ende einer Zubereitung eines heissen Getränks aufgeheizt. Im Betriebsmodus "Manuell" muss die Energiezufuhr zum Durchlauferhitzer 27 entsprechend manuell ausgelöst werden. Mit einer Veränderung des Schaltzustands des Schalters 128 erfolgt aber keine direkte Einflussnahme auf den Betriebszustand des Durchlauferhitzers 27, nur der Betriebsmodus wird vorgegeben. Für das Aktivieren der Dampfheizung des Durchlauferhitzers 27 ist gemäss diesem Ausführungsbeispiel der Positionsschalter 124 am Dampfventil 151 erforderlich.

Ein Anzeigeelement 34 kann zur Anzeige des Betriebszustandes der Dampferzeugungsvorrichtung 150 vorgesehen sein, analog zu dem in Fig. 1 dargestellten Ausführungsbeispiel. Beispielsweise kann das Anzeigeelement 34 als eine Kontrollleuchte oder Signalleuchte ausgebildet sein. Das Anzeigeelement 34 kann beispielsweise leuchten, wenn die Dampferzeugungsvorrichtung 150 in Betrieb ist.

Fig. 12a zeigt eine Schnittdarstellung des Dampfventils 151 für die Dampferzeugungsvorrichtung 150 gemäss Fig. 11 in einer Stellung, in welcher Dampf in die Abflussleitung 126 geleitet wird.

Fig. 12b zeigt eine Schnittdarstellung des Dampfventils 151 für die Dampferzeugungsvorrichtung 150 gemäss Fig. 11 in einer Stellung, in welcher Dampf durch die Dampfleitung 26 in die Dampflanze zur Düse 29 und gleichzeitig in die Abflussleitung 126 geleitet wird.

Fig. 12c zeigt eine Schnittdarstellung des Dampfventils 151 für die Dampferzeugungsvorrichtung 150 gemäss Fig. 11 in einer Stellung, in welcher Dampf durch die Dampfleitung 26 in die Dampflanze zur Düse 29 geleitet wird.

Die Dampferzeugungsvorrichtung 150 gemäss Fig. 11 umfasst einen Hebel 125 für das Dampfventil 151. Durch die Betätigung des Hebels 125 kann eine Hohlventilwelle 132 betätigt werden, welche in einem Ventilkörper 131 des Dampfventils 151 angeordnet ist. Insbesondere wird mittels des Hebels 125 eine Drehbewegung der Hohlventilwelle 132 eingeleitet. Auf dem Ende der Hohlventilwelle 132, welches gegenüberliegend zum Hebel 125 angeordnet ist, befindet sich der Dampfeinlass, das heisst der Teil der Fluidleitung 80, der vom Durchlauferhitzer 27 zum Dampfventil 151 führt.

Die Hohlventilwelle 132 weist Öffnungen auf, die mit der Dampfleitung 26 oder der Abflussleitung 126 in fluidleitendem Kontakt sind, sodass durch die Drehbewegung der Hohlventilwelle 132 eine fluidleitende Verbindung vom Zufluss vom Durchlauferhitzer 27 zu der Dampfleitung 26 oder der Abflussleitung 126, siehe hierzu Fig. 12 a-c, freigegeben werden kann. Der Wasserdampf oder Heisswasser kann durch die Dampfleitung 26 geleitet werden und verlässt diese durch eine Düse 29 oder kann durch die Abflussleitung 126 abgelassen werden.

Gemäss dem vorliegenden Ausführungsbeispiel der Dampferzeugungsvorrichtung 150 kann auf ein Überdruckventil verzichtet werden, da die Hohlventilwelle 132 einen kleinen Schwenkbereich aufweist, sodass Dampf oder Heisswasser gleichzeitig in die Dampfleitung 26 und die Abflussleitung 126 eintreten kann. Gemäss diesem Ausführungsbeispiel kann im System kein Überdruck mehr aufgebaut werden, sodass auf das Überdruckventil verzichtet werden kann.

Das Dampfventil 151 ist so konstruiert, dass niemals beide Austrittsleitungen gleichzeitig verschlossen sind, wie aus Fig. 12a-12c hervorgeht. Das heisst, es kann sich kein Druck zwischen dem Dampfventil 151 und der Fluidleitung 80 aufbauen, was es ermöglicht, auf ein Überdruckventil zu verzichten. Die Abflussleitung 126 in die Tropfschale 65 wird benötigt, um Wasser oder Dampf während der Vorheizphase ableiten zu können. Das zum Konsum verwendete Wasser, das in Form von Heisswasser oder Dampf vorliegen kann, wird ausschliesslich über die Dampflanze, enthaltend die Dampfleitung 26, bezogen.

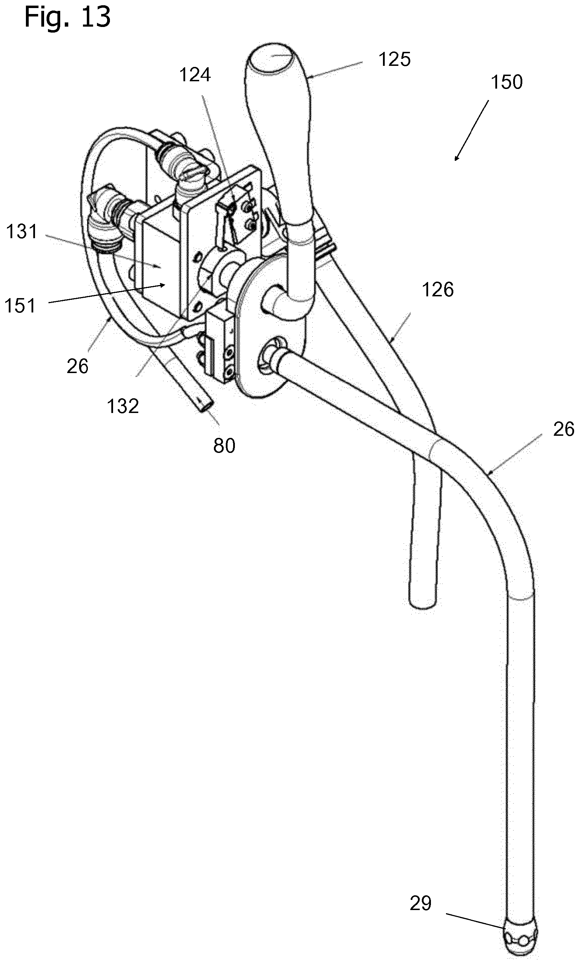

Fig. 13 zeigt eine perspektivische Ansicht der Dampferzeugungsvorrichtung 150, wobei der Einfachheit halber der Durchlauferhitzer 27, zu welchem die Fluidleitung 80 führt, weggelassen ist. Das Dampfventil 151 oder der Hebel 25 ist mit einem Positionsschalter 124 ausgerüstet, der erkennt, wann das Dampfventil 151 geschlossen ist, bzw. es sich in einer Ruheposition befindet. Das heisst, der Durchlauferhitzer 27 wird in dem Moment eingeschaltet, wenn der Hebel 25 etwas aus der Ruheposition gedreht wird. Mit dem Positionsschalter 124 wird somit der Durchlauferhitzer 27 in Abhängigkeit von der Stellung des Hebels 25 ein- oder ausgeschaltet.

Für den Fachmann ist offensichtlich, dass viele weitere Varianten zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C bis N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Eine Vorrichtung (100, 200, 300, 400) zur Zubereitung eines heissen Getränks umfassend einen Wasserbehälter (7), einen Durchlauferhitzer (23, 27) und eine Brühvorrichtung (40), wobei der Wasserbehälter (7) ein Anschlusselement (22) für kaltes Wasser aufweist, **dadurch gekennzeichnet, dass** der Wasserbehälter (7) fluidleitend mit dem Durchlauferhitzer (23) verbunden ist, sodass der Durchlauferhitzer (23) mit dem kalten Wasser aus dem Wasserbehälter befüllbar ist, wobei der Wasserbehälter (7) einen Behälterboden (72), einen Behältermantel (70) und einen Behälterdeckel (71) umfasst, wobei ein Kolben (14) im Wasserbehälter (7) bewegbar zwischen einem oberen Totpunkt und einem unteren Totpunkt angeordnet ist, wobei der Wasserbehälter (7) einen Füllraum für ein Füllvolumen an kaltem Wasser enthält, der zwischen dem Kolben (14) und dem Behälterboden (72) angeordnet ist, wenn der Kolben (14) sich nicht im unteren Totpunkt befindet, wobei der Füllraum fluidleitend mit dem Durchlauferhitzer (23) verbunden ist, der Durchlauferhitzer (23) mit dem kalten Wasser aus dem Füllraum befüllbar ist, sodass eine dem Füllvolumen entsprechende Wassermenge in den Durchlauferhitzer (23) einspeisbar ist.

2. Die Vorrichtung nach Anspruch 1, wobei das Anschlusselement (22) oder eine Einlassleitung zur Befüllung des Füllraums mit dem kalten Wasser stromaufwärts des Füllraums angeordnet ist.

3. Die Vorrichtung nach Anspruch 2, wobei im Anschlusselement (22) oder in der Einlassleitung ein Rückschlagventil angeordnet ist.

4. Die Vorrichtung nach einem der vorhergehenden Ansprüche, wobei die Brühvorrichtung (40) ein Brühventil (41) enthält.

5. Die Vorrichtung nach Anspruch 4, wobei das Brühventil (41) einen Drucksensor (16) enthält oder ein Drucksensor (16) stromabwärts des Brühventils (41) angeordnet ist.

6. Die Vorrichtung nach einem der Ansprüche 4 oder 5, wobei das Brühventil (41) einen Ventilkörper (17) und eine Ventilstange (18) umfasst, wobei die Ventilstange (18) mit einem Hebel (45) verbunden sein kann, der vom Benutzer zur Einstellung des gewünschten Durchflusses in der Brühvorrichtung (40) manuell betätigbar ist.

7. Die Vorrichtung nach einem der vorhergehenden Ansprüche, wobei eine Kolbenstange (5) vorgesehen ist, an deren unterem Ende der Kolben (14) befestigt ist.

8. Die Vorrichtung nach Anspruch 7, wobei die Kolbenstange (5) ein oberes Ende aufweist, welches mit einem Schwenkhebel (1) derart in Verbindung ist, sodass die Kolbenstange (5) durch Betätigung des Schwenkhebels (1) relativ zum Wasserbehälter (7) bewegbar ist.

9. Die Vorrichtung nach einem der Ansprüche 7 oder 8, wobei die Kolbenstange (5) ein oberes Ende umfasst, welches eine Zahnstange (4) enthält.

10. Die Vorrichtung nach einem der vorhergehenden Ansprüche 8 oder 9, wobei der Schwenkhebel (1) ein Zahnrad (2) enthält.

11. Die Vorrichtung nach Anspruch 10, wobei das Zahnrad (2) im Eingriff mit der Zahnstange (4) steht.

12. Die Vorrichtung nach Anspruch 11, wobei zwischen dem Zahnrad (2) und der Zahnstange (4) eine Zahnwippe (3) angeordnet ist, um eine Bewegung vom Zahnrad (2) auf die Zahnstange (4) zu übertragen.

13. Die Vorrichtung nach einem der vorhergehenden Ansprüche, wobei ein Federelement (8, 9) im Wasserbehälter (7) zwischen dem Behälterdeckel (71) und dem Kolben (14) angeordnet ist.

14. Die Vorrichtung nach einem der vorhergehenden Ansprüche, wobei die Vorrichtung eine Dampferzeugungsvorrichtung (50, 150) zur Erzeugung von Wasserdampf enthält.

15. Die Vorrichtung nach einem der vorhergehenden Ansprüche, wobei der Wasserbehälter (7) einen Wassertank (74) und einen Druckbehälter (78) oder eine Wasserversorgungsleitung (85) umfasst.

## Claims

1. A device (100, 200, 300, 400) for the preparation of a hot beverage comprising a water tank (7), a flow heater (23, 27) and a brewing device (40), the water tank (7) having a connection element (22) for cold water, **characterized in that** the water tank (7) is fluidly connected to the flow heater (23), so that the flow heater (23) can be filled with the cold water from the water tank wherein the water tank (7) comprises a tank bottom (72), a tank jacket (70) and a tank lid (71), wherein a piston (14) in the water tank (7) is movable between a top dead center and a bottom dead center, wherein the water tank (7) contains a filling space for cold water, which is arranged between the piston (14) and the tank bottom (72) when the piston (14) is not located in the bottom dead center, wherein the filling space is fluidly connected to the flow heater (23) such that the flow heater (23) can be filled with the cold water from the filling space, so that a quantity of water corresponding to the filling space can be fed into the flow heater (23).

2. The device of claim 1, wherein the connection element (22) or an inlet conduit for filling the filling space with cold water is arranged upstream of the filling space.

3. The device of claim 2, wherein a check valve is arranged in the connection element (22) or in the inlet conduit.

4. The device of one of the preceding claims, wherein the brewing device (40) includes a brewing valve (41).

5. The device of claim 4, wherein the brewing valve (41) comprises a pressure sensor (16) or a pressure sensor (16) is arranged downstream of the brewing valve (41).

6. The device of one of claims 4 or 5, wherein the brewing valve (41) comprises a valve body (17) and a valve rod (18), wherein the valve rod (18) can be connected to a lever (45) which can be operated manually by the user to set the desired flow in the brewing device (40).

7. The device of one of the preceding claims, wherein a piston rod (5) is provided and the piston is attached at the lower end (14) of the piston rod.

8. The device of claim 7, wherein the piston rod (5) comprises an upper end, which is connected to a swivel lever (1) in such a way that the piston rod (5) can be moved relative to the water tank (7) by actuating the swivel lever (1).

9. The device of one of claims 7 or 8, wherein the piston rod (5) comprises an upper end which contains a rack (4).

10. The device of one of claims 8 or 9, wherein the swivel lever (1) contains a gear (2).

11. The device of claim 10, wherein the gear (2) is in engagement with the rack (4).

12. The device of claim 11, wherein a tooth rocker (3) is arranged between the gear (2) and the rack (4) to transmit the movement from the gear (2) to the rack (4).

13. The device of one of the preceding claims, wherein a spring element (8, 9) is arranged in the water reservoir (7) between the tank lid (71) and the piston (14).

14. The device of one of the preceding claims, wherein the device comprises a steam generating device (50, 150) for generating steam.

15. The device of one of the preceding claims, wherein the water reservoir (7) comprises the water tank (74) and a pressure vessel (78) or a water supply line (85).

## Revendications

1. Dispositif (100, 200, 300, 400) pour préparer une boisson chaude, comprenant un réservoir d'eau (7), un réchauffeur à flux continu (23, 27) et un dispositif d'infusion (40), le réservoir d'eau (7) ayant un élément de raccordement (22) pour l'eau froide, **caractérisé en ce que** le réservoir d'eau (7) est relié fluidement au réchauffeur à flux continu (23), de sorte que le réchauffeur à flux continu (23) peut être rempli d'eau froide à partir du réservoir d'eau, le réservoir d'eau (7) ayant un fond de réservoir (72), un boîtier de réservoir (70) et un couvercle de réservoir (71), **en ce qu'**un piston (14) est agencé dans le réservoir d'eau (7) de sorte qu'il peut se déplacer entre un point mort haut et un point mort bas, le réservoir d'eau (7) ayant un espace de remplissage pour un volume de remplissage de l'eau froide, qui est disposée entre le piston (14) et le fond de réservoir (72) lorsque le piston (14) n'est pas au point mort bas, **en ce que** l'espace de remplissage est en communication fluidique avec le réchauffeur à flux continu (23), **en ce que** le réchauffeur à flux continu (23) peut être rempli d'eau froide à partir de l'espace de remplissage, de sorte qu'une quantité d'eau correspondant au volume de remplissage peut être introduite dans le réchauffeur à flux continu (23).

2. Dispositif selon la revendication 1, dans lequel l'élément de raccordement (22) ou une conduite d'admission pour remplir l'espace de remplissage avec de l'eau froide est disposé en amont de l'espace de remplissage.

3. Dispositif selon la revendication 2, dans lequel un clapet anti-retour est agencé dans l'élément de raccordement (22) ou dans la conduite d'admission.

4. Dispositif selon l'une quelconque des revendications précédentes, dans lequel le dispositif d'infusion (40) comprend une vanne d'infusion (41).

5. Dispositif selon la revendication 4, dans lequel la vanne d'infusion (41) comprend un capteur de pression (16) ou un capteur de pression (16) est positionné en aval de la vanne d'infusion (41).

6. Dispositif selon la revendication 4 ou 5, dans lequel la vanne d'infusion (41) comprend un corps de vanne (17) et une tige de vanne (18), la tige de vanne (18) pouvant être reliée à un levier (45) qui peut être commandé manuellement par l'utilisateur pour le réglage du débit souhaité dans le dispositif d'infusion (40).

7. Dispositif selon l'une quelconque des revendications précédentes, dans lequel une tige de piston (5) est prévue, en ce que le piston (14) est fixé à l'extrémité inférieure de laquelle tige.

8. Dispositif selon la revendication 7, dans lequel la tige de piston (5) a une extrémité supérieure qui est reliée à un levier pivotant (1) de telle manière que la tige de piston (5) peut être déplacée par rapport au réservoir d'eau ( 7) par actionnement du levier pivotant (1).

9. Dispositif selon l'une quelconque des revendications précédentes 7 ou 8, dans lequel la tige de piston (5) comprend une extrémité supérieure contenant une crémaillère (4).

10. Dispositif selon l'une quelconque des revendications précédentes 8 ou 9, dans lequel le levier pivotant (1) comporte un engrenage (2).

11. Dispositif selon la revendication 10, dans lequel l'engrenage (2) est en prise avec la crémaillère (4).

12. Dispositif selon la revendication 11, dans lequel une bascule dentée (3) est disposée entre l'engrenage (2) et la crémaillère (4) pour transmettre un mouvement de l'engrenage (2) à la crémaillère (4) .

13. Dispositif selon l'une quelconque des revendications précédentes, dans lequel un élément à ressort (8, 9) est agencé dans le réservoir d'eau (7) entre le couvercle de réservoir (71) et le piston (14).

14. Dispositif selon l'une quelconque des revendications précédentes, dans lequel le dispositif comprend un dispositif de génération de vapeur (50, 150) pour générer de la vapeur.

15. Dispositif selon l'une quelconque des revendications précédentes, dans lequel le réservoir d'eau (7) comprend un récipient d'eau (74) et un récipient sous pression (78) ou une conduite d'alimentation en eau (85).
